(19) **Europäisches Patentamt**
**European Patent Office**
**Office européen des brevets**

(11) **EP 1 763 150 B1**

(12) **EUROPEAN PATENT SPECIFICATION**

(45) Date of publication and mention
of the grant of the patent:
**11.03.2015 Bulletin 2015/11**

(51) Int Cl.:
***H04B 7/08*** *(2006.01)*     ***H04B 17/00*** *(2015.01)*

(21) Application number: **04735476.6**

(86) International application number:
**PCT/CN2004/000575**

(22) Date of filing: **31.05.2004**

(87) International publication number:
**WO 2005/117286 (08.12.2005 Gazette 2005/49)**

(54) **CALIBRATION APPARATUS AND METHOD FOR A RECEIVING LINK OF ARRAY COMMUNICATION SYSTEM**

KALIBRATIONSVORRICHTUNG UND  VERFAHREN FÜR EINE EMPFANGSSTRECKE EINES GRUPPEN-KOMMUNIKATIONSSYSTEMS

PROCEDE ET APPAREIL D'ETALONNAGE POUR UNE LIAISON DE RECEPTION D'UN SYSTEME DE COMMUNICATION RESEAU

(84) Designated Contracting States:
**DE FR**

(43) Date of publication of application:
**14.03.2007 Bulletin 2007/11**

(73) Proprietor: **ZTE Corporation**
**Shenzhen 518057 (CN)**

(72) Inventors:
• **GUO, Tiansheng,**
**ZTE Plaza, Keji Road South**
**Shenzhen,**
**Guangdong 518057 (CN)**

• **WANG, Wenjie,**
**ZTE Plaza, Keji Road South**
**Shenzhen,**
**Guangdong 518057 (CN)**

(74) Representative: **Dr. Weitzel & Partner**
**Patent- und Rechtsanwälte mbB**
**Friedenstrasse 10**
**89522 Heidenheim (DE)**

(56) References cited:
**WO-A1-01/19101      WO-A1-01/52446**
**WO-A1-99/57820      CN-A- 1 388 668**

**Description**

**FIELD OF THE INVENTION**

The present invention relates to a calibration technique for a receiving link of wireless communication system which adopts Frequency Division Duplex (FDD) mode, and more particularly, to an apparatus and a method for calibrating a receiving link of wireless communication system on-line, especially to an apparatus and a method for calibrating amplitude consistence and phase consistence of a receiving link of array communication system which adopts adaptive antenna array, smart antenna, phase-array radar, etc.

**BACKGROUND OF THE INVENTION**

In cellular wireless communication system, with the increasing of users' number, frequency spectrum congestion phenomenon will become more and more serious, and call loss ratio will increase markedly in areas of dense users. In order to solve this problem, it is possible to increase the number of base stations in a network system, however, with the increasing density of the base stations, co-channel interference among the base stations is becoming more and more serious, which brings much difficulty for network optimization. To solve the above problem, smart antenna is applied to the cellular wireless communication system, multiple independent beams can be formed through array signal process and beam forming method of the antenna array, and each user can be traced by adaptively adjusting the beam main lobe pointing or automatically switching the beam, thereby increasing the signal to interference ratio and increasing the capacity of the cellular wireless communication system.

In wireless communication system, signal received by a base station from each user is interfered by not only the multiple accesses in this cell, but also users of adjacent cells. And if the communication system is of Time Division Duplex (TDD) mode, it will also be interfered by signal with the same frequency from remote base stations. The use of smart antenna or adaptive antenna in the base station will realize directional reception and transmission of user signal, the advantages of the directional reception and transmission are to increase the receiving gain of the user signal, to reduce the interference among user signals, to increase the coverage area of the base station, and to increase the capacity of the wireless communication system.

Several problems can be solved through the array signal process, such as space frequency spectrum estimation, beam forming and zero forming. There are many algorithms for the array signal process, such as adaptive spatial filtering algorithm, and this algorithm can conduct super-resolution estimation for the distribution of arrival direction of space signal, and then forms beam such that the main lobe of the array directional chart points to desired signal, and also, the algorithm can form zero in the direction of interference source, thereby increasing the signal to interference ratio (SIR), reducing co-channel interference, and then increasing capacity of the system and enlarging the coverage area of the base station.

A receiving link consists of an antenna unit in the array antenna, a radio frequency cable connected thereto, an uplink and downlink signal detaching apparatus, and a low noise amplifier, and a coherent array receiver, as the characteristic differences of the parts used in each receiving link will result in inconsistent frequency responses of each receiving link in the array antenna, and factors, such as mutual coupling effect between array elements and differences in positions of the array elements, will result in marked difference between actual array flow pattern and ideal array flow pattern, such array flow pattern error will result in decreased performance of the beam forming algorithm, which directly affects the pointing of the main lobe in the array directional chart, zero position and null depth, and therefore, each receiving link in the array antenna need to use certain calibration apparatus and calibration method to calibrate its frequency response to be consistent, such that advantages brought forth by the array signal process method and beam forming method to the base station of smart type can be exhibited.

Array calibration is a critical technique in systems, such as adaptive antenna array, smart antenna, phase-array radar, and in wireless communication system, no matter the base station of smart type adopting beam switching method or the base station of smart type adopting adaptive algorithm, amplitude characteristic of an array receiving link must be calibrated to be consistent as long as realization of directional transmission of user signal is desired, and meanwhile, phase characteristic should also be calibrated to be consistent.

Currently, there are mainly three kinds of techniques regarding array calibration, which will be introduced one by one as follows:

(1) China patent application NO. 01800020.7, entitled "Array Antenna Wireless Communication Apparatus and Calibration Method", provides a method for calibrating array receiving link. The method uses an apparatus or a specific calibration apparatus, before communication starts, to measure amplitude characteristic and phase characteristic of an individual receiving link, then, the result measured is used to form array calibration weigh value, and the weigh value is used to calibrate the amplitude characteristic and the phase characteristic of the array receiving link to be consistent. For this method, as calibration weigh value is changeless during the calibration, it cannot conduct real-time calibration for the ever-changing amplitude and phase errors of the array receiving link, which does not help engineering use and maintenance, and especially, the method is not suitable for on-line calibration for the base station of smart type which has been run in the communication system.

(2) The second calibration method is to provide a beacon antenna and corresponding calibration signal transceiver in a far-field area or a near-field area of the antenna array. When calibrating the uplink of the base station, a calibration signal transmitter sends known calibration signal via the beacon antenna, and the base station, after receiving the calibration signal, calculates amplitude and phase of each receiving link depending on known information, and calculates calibration coefficient of each receiving link, then uses such calibration coefficients to calibrate amplitude and phase of each receiving link, thereby making impulse response of each receiving link in the array consistent. Defect of this method is that specific calibration signal transceiver and beacon antenna should be used, thereby increasing the complexity and cost for realizing the base station. Further, when the beacon antenna is placed in the far-field area, as the calibration signal will be reflected or refracted by the objects in the environment around, so the signals arriving at the array antenna include multipath signal, and in order to eliminate the effect of the multipath signal, algorithm for calculating the calibration weigh value will be very complex, thereby increasing the difficulty in realizing the calibration weigh value calculating apparatus; when the beacon antenna is placed in the near-field area, the calibration signal arrives at each receiving link of the array antenna by means of air coupling mode, so it is necessary to use an apparatus to pre-calibrate the amplitude and phase characteristics of the coupling structure. The technical solution is adopted in documents such as China patent application NO. 00815528,3, US patent NO. 6,615,024 and US patent application No. 2003050016.

(3) The third method is to provide a coupler at the front end of radio frequency of each receiving link, a specific calibration signal transceiver is connected with these couplers, calibration signal is coupled to each receiving link from the front end of the radio frequency, and the calibration method is the same as that of the second method. As the calibration signal doesn't pass through the antenna unit and feed line, thus the array calibration weigh value obtained doesn't include the gain information and phase information of the antenna unit and the feed line connected to the same, and then the error of inconsistent gain and the error of inconsistent phase of each antenna unit and feed lines connected thereto cannot be calibrated, so in this case, in order to calibrate the whole the receiving link, it is necessary to pre-measure the gain and phase characteristic of the couplers, the antenna unit and the feed lines connected to the antenna unit, and then value measured is used to correct the calculated calibration weigh value. The defect of this method is that the gain and phase characteristic of the coupler, antenna unit and feed lines are regarded as changeless, and an apparatus is used to measure their gain and phase characteristic, and then the measured results are used to correct the calculated calibration weigh value. Documents such as China patent application NO. 01112987.5, US patent NO. 6,600,445, and CA patent application No. CA2381384 adopt this calibration technique.

Furthermore, WO01/52446A1 provides an array antenna radio communication apparatus and a calibration method in which calibration can be carried out with high accuracy while suppressing interference with communication. In this document, it adopts the following solution: Before starting communication, a recording section records a highly reliable correction amount of phase rotation determined from a sufficient number of samples. During communication, a measuring section measures the amount of phase rotation of a received known signal, a comparing section compares the measured amount of phase rotation with the correction amount of phase rotation, and then the correction amount of phase rotation is updated, as required, according to the comparison results.

## SUMMARY OF THE INVENTION

The technical problem the present invention aims to solve is to provide a calibration apparatus and a method for a receiving link of array communication system, and no specific calibration signal transmitting link or specific benchmark receiving link is required, the problem that the prior art cannot conduct real-time and on-line calibration for inconsistent errors of gain and phase of the antenna unit and feed lines can be solved, and the problem that the calibration signal generation device in the prior art is complex and of high cost can also be solved.

A calibration apparatus for receiving links of array communication system according to the present invention, wherein each of the receiving links comprises an antenna unit, a radio frequency cable, a duplexer, a low noise amplifier, which are connected in series, and an array receiver having a calibration function; the calibration apparatus for the receiving links comprises: an uplink calibration signal generation device, an uplink calibration signal allocation device, a clock generation device, n couplers, an array receiver having a calibration function, and a power supply and feeder device (feedback device);

the uplink calibration signal generation device has one end connected to a first antenna unit and the other end connected to a first coupler of the n couplers corresponding to the first antenna unit, and is used to separate downlink signal output by the first coupler and generate uplink calibration signal, then, output the uplink calibration signal to the uplink calibration signal allocation device;

the uplink calibration signal allocation device, which has one terminal connected to the uplink calibration signal generation device, is used to divide the uplink calibration signal into n uplink calibration signals and outputting them to the n couplers; the clock generation device, which has one terminal connected to the uplink calibration signal generation device, is used to provide the uplink calibration signal generation device with clock signal according to the control signal of a base station; the n couplers correspond to the n antenna units respectively, each of which has one end connected, via the uplink calibration signal generation device, to one antenna units of n the antenna units and the other end respectively connected to one of n the duplexers via the radio frequency cable, for coupling the uplink calibration signal and an uplink signal received by the antenna units and then outputting them into one of the n duplexers and one of the low noise amplifiers; the array receiver having a calibration function, which has one terminal connected to the low noise amplifier, receives uplink signal coupled with the uplink calibration signal output from the low noise amplifier, processes the received uplink signal, separates the uplink calibration signal, and based on separated the uplink calibration signal, calculates calibration weigh value of the array receiving link and then calibrates it; the power supply and feeder device, which is located in the station and connected to the clock generation device, is used to provide the clock generation device with power supply and sending control signal to the base station.

A calibration method for a receiving link of array communication system in the present invention, wherein each of the receiving links includes an antenna unit, a radio frequency cable, a duplexer, a low noise amplifier, which are connected in series; a calibration apparatus for the receiving links includes: an uplink calibration signal generation device, an uplink calibration signal allocation device, a clock generation device, n couplers, an array receiver having a calibration function, and a power supply and feeder device, the method comprises the following steps:

step 1, measuring amplitude-phase characteristics of antenna units and the uplink calibration signal allocation device, acquiring a pre-calibration coefficient of the receiving link;

step 2, generating uplink calibration signal according to an instruction from the base station, and the uplink calibration signal, after being coupled with uplink signal received by the antenna units, entering the receiving link;

step 3, detecting the uplink signal power of each receiving link, and based on the uplink signal power, calculating the calibration weigh value of a automatic gain control circuit in the array receiver;

step 4, searching uplink calibration signal in the uplink signal, estimating the amplitude characteristic and the phase characteristic of the receiving link according to the search result, and calculating the original calibration weigh value of each receiving link according to the uplink calibration signals which are searched out;

step 5, correcting the original calibration weigh value based on the pre-calibration coefficient and the calibration weigh value of the automatic gain control circuit, and acquiring the calibration weigh value of each receiving link;

step 6, calibrating the receiving link according to the calibration weigh value.

The uplink calibration signal of the present invention is generated from downlink signal, transmitted by the base station, whose frequency has been converted, and no specific calibration signal transmitting apparatus is desired; and the structure of the calibration signal generation device in the present invention is simple, which omits devices of the prior calibration signal generation device such as spread spectrum device, scrambling device, modulation device, digital-to-analog conversion device. The present invention can also calibrate the effect, generated by the automatic gain control (AGC) circuit in the array receiver, on the gain characteristic of array signal, and the AGC circuit of the array receiver in the present invention need not control the gain consistence of the AGC circuit, thereby simplifying the design of the AGC circuit in the array receiver. When the present invention is applied to calibrate the smart base station of the WCDMA system, it is unnecessary to use uplink scrambling code and spread spectrum code resource to generate uplink calibration signal, and the uplink calibration signal generated in the present invention, after power adjusted, equals to a user signal, normal communication of the other users is only affected a little when array calibration is conducted, thereby calibrating on-line the inconsistent error of frequency response of each receiving link in the array. The calibration signal of the present invention, which can calibrate the inconsistent error of the amplitude and phase of the receiving link caused by factors such as different lengths of the feed lines, degree of connecting tightness of the connectors of the radio frequency, is injected into each receiving link from the coupling apparatus at the joint of the antenna unit and the feed lines.

**BRIEF DESCRIPTION OF THE DRAWINGS**

Fig. 1 is a structural schematic view of a base station comprising the calibration apparatus of the present invention;

Fig. 2 is a structural schematic view of the uplink calibration signal generation device 10 in the calibration apparatus;

Fig. 3 is a schematic view of the uplink calibration signal allocation device 20 in the calibration apparatus;

Fig. 4 is a schematic view of the array receiver 20 in the calibration apparatus;

Fig. 5 is a schematic view of the power supply and feeder device 500;

Fig. 6 is a schematic view illustrating the pre-calibration on an outdoor unit;

Fig. 7 is a schematic view on the principle for searching calibration signal; and

Fig. 8 is an equivalent model schematic view of amplitude-phase characteristics of each receiving link of the outdoor unit.

**DESCRIPTION OF THE PREFERRED EMBODIMENTS**

The technical solution of the present invention will be further described in detail hereinafter in connection with the drawings and embodiments.

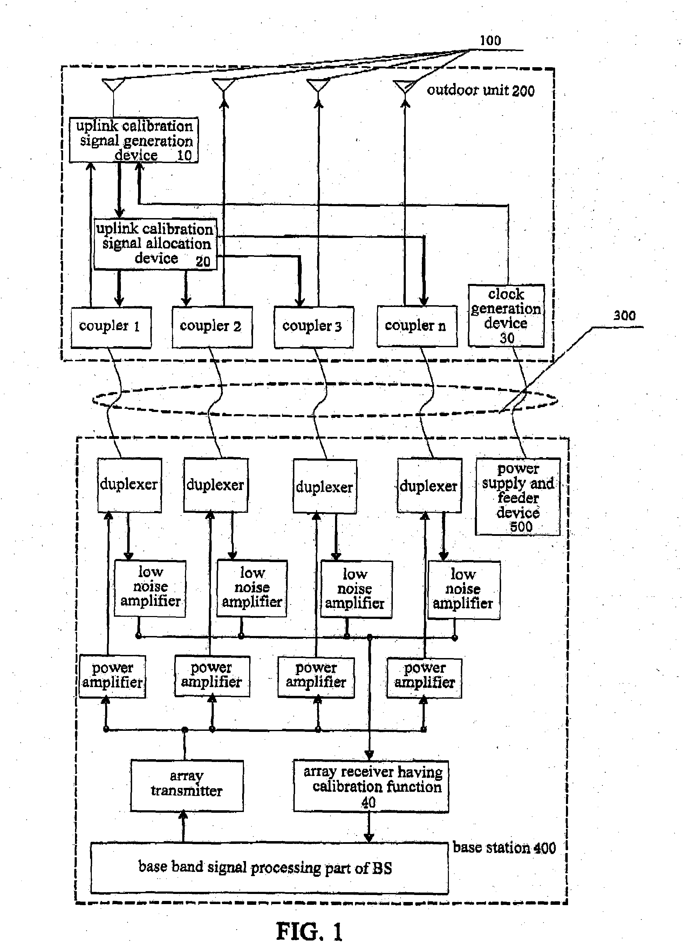

As shown in Fig. 1, the calibration apparatus for a receiving link of array communication system in the present invention includes: an uplink calibration signal generation device 10 located in an outdoor unit 200, an uplink calibration signal allocation device 20, a clock generation device 30, n couplers, an array receiver 40 having a calibration function located in a base station 400, and a feeder device 500 supplying electric power for and sending control signal to the outdoor unit 200. The n receiving links of the array communication system include n antenna units 100, a radio frequency cable 300, n duplexers, n low noise amplifiers and array receivers, wherein the antenna units 100 are located in the outdoor unit 200, the radio frequency cable 300 is the apparatus which sends signals between the outdoor unit 200 and the base station 400, and the other apparatuses are all located in the base station 400.

In the outdoor unit 200, n antenna units 100 are corresponding to n couplers; a first antenna unit is connected with an end of the uplink calibration signal generation device 10, the output of the uplink calibration signal generation device 10 is sent into the uplink calibration signal allocation device 20. The output of the uplink calibration signal allocation device 20 is respectively sent into the n couplers which are connected with n receiving links of the base station via the radio frequency cable 300. Additionally, the outputs of both a coupler 1 and the clock generation device 30 are connected to the uplink calibration signal generation device 10. When calibrating the receiving links, the base station 400 sends the control signal to the clock generation device 30, which generates a clock signal of corresponding frequency for the uplink calibration signal generation device 10, via the feeder device 500.

For each receiving link and each transmitting link of the base station, coupler 1 to coupler n are paths, and downlink signal transmitted by a first transmitting link of the base station can enter the uplink calibration signal generation device 10 after directly passing through the coupler 1, A downlink signal less than 1dB is separated from the uplink calibration signal generation device 10, then the other signals are transmitted from the first antenna unit. It should be noted that attenuation caused to the original downlink signal should be less than 1dB when the uplink calibration signal generation device 10 separates the downlink signal. The separated downlink signal mixes frequency with the clock signal output by the clock generation device 30, thereby generating uplink calibration signal.

The calibration signal is then output into the uplink calibration signal allocation device 20 by the uplink calibration signal generation device 10, and the calibration signal is divided into n calibration signals by the uplink calibration signal allocation device 20 to be output to coupler 1 to coupler n. In each coupler, the n calibration signals enter each receiving link of the base station via the radio frequency cable 300 after respectively combining with n uplink signals received by the first antenna unit to the n antenna unit. The uplink signal of each receiving link is sent into the array receiver 40 having a calibration function for calibration via respective duplexer and low noise amplifier and is then output into a baseband signal processing part for processing.

Each component of the calibration apparatus of the present invention will be described one by one in detail blow.

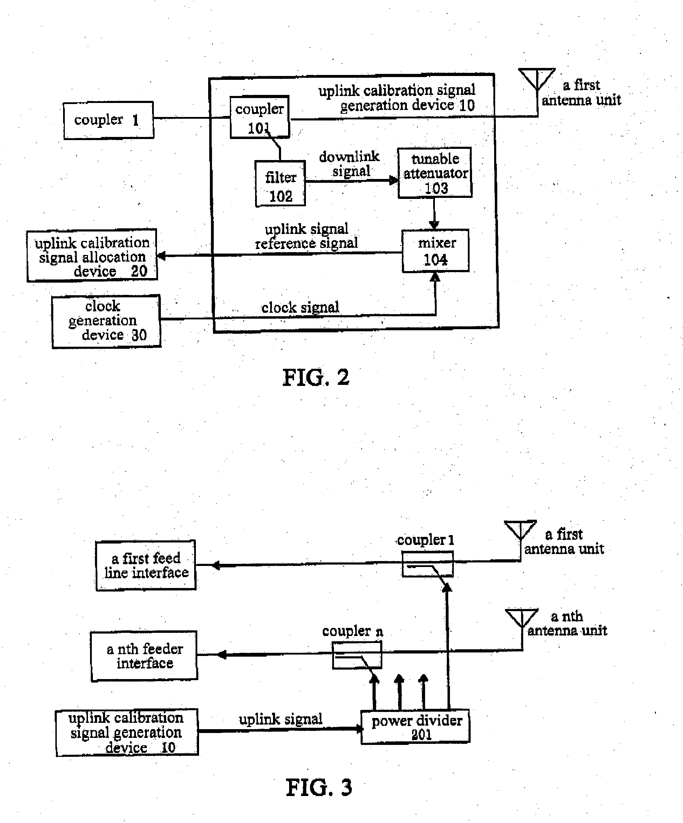

As shown in Fig. 2, the uplink calibration signal generation device 10 includes a coupler 101, a filter 102, a tunable attenuator 103, and a mixer 104. The coupler 101 couples a part of the uplink and downlink signals from a first transceiving link. Because the uplink and downlink signals are transmitted in a Frequency Division Duplex (FDD) mode, the downlink signal is separated through the filter 102, and is then sent into the mixer 104 after being attenuated by the tunable attenuator 103. When the uplink calibration signal generation device 10 has received the clock signal sent by the clock generation device 30, the mixer 104 starts to work. The downlink signal, after being attenuated, is mixed with the clock signal from the clock generation device 30 by the mixer 104, thereby generating the uplink calibration signal of desired frequency and power. As the power of the downlink signal is very high, the power of the uplink calibration signal obtained by frequency conversion is also very high. If the uplink calibration signal is directly output into each receiving link of the array antenna, the effect on normal communication is also very great, so the present invention adopts the tunable attenuator 103 to adjust the power of the downlink signal. The tunable attenuator 103 can also be located at the output terminal of the mixer 104 to adjust the power of the uplink calibration signal.

The clock generation device 30 provides clock signal to the uplink calibration signal generation device 10, and controls the work of the uplink calibration signal generation device 10. The base station controls whether the uplink calibration signal generation device 10 generates the uplink calibration signal by controlling whether the clock generation device 30 generates the clock signal, including: the clock generation device 30 accepts the control of the base station, when the calibration starts, the clock generation device 30 generates a clock signal and outputs the same to the uplink calibration signal generation device 10, when a clock is input, the uplink calibration signal generation device 10 outputs a signal; when the calibration ends or no calibration is needed, the clock generation device 30 generates no clock signal, the uplink calibration signal generation device 10 outputs no signal as no clock signal is input. The frequency of the clock signal generated by the clock generation device 30 is programmable. The uplink calibration signal of desired frequency can be generated according to the frequency point of the current base station.

Fig.3 gives the structural schematic view of the uplink calibration signal allocation device 20. One calibration signal is divided into n calibration signals by the uplink calibration signal allocation device 20 when it receives the uplink calibration signal output by the uplink calibration signal generation device 10, and then the n calibration signals are coupled into the n receiving links of the base station through the coupler 1 to coupler n.

The uplink calibration signal allocation device 20 includes a power divider 201. After the uplink calibration signal output by the uplink calibration signal generation device 10 is sent into the power divider 201, the calibration signal is divided into n calibration signals by the power divider 201. Each calibration signal is then coupled into each receiving link of the array antenna through the corresponding n couplers.

In the present invention, the array receiver also has the calibration function in addition to the basic function of receiving user uplink signal. Therefore, the n uplink signals coupled with the calibration signal are input into the array receiver 40 having a calibration function via respective duplexer and low noise amplifier. The array receiver 40 conducts processes, such as two times of down frequency conversion, demodulation, and A/D conversion, on the above described signals, separates the calibration signal, and then calculates the calibration weigh value of the receiving link and calibrates the array signal.

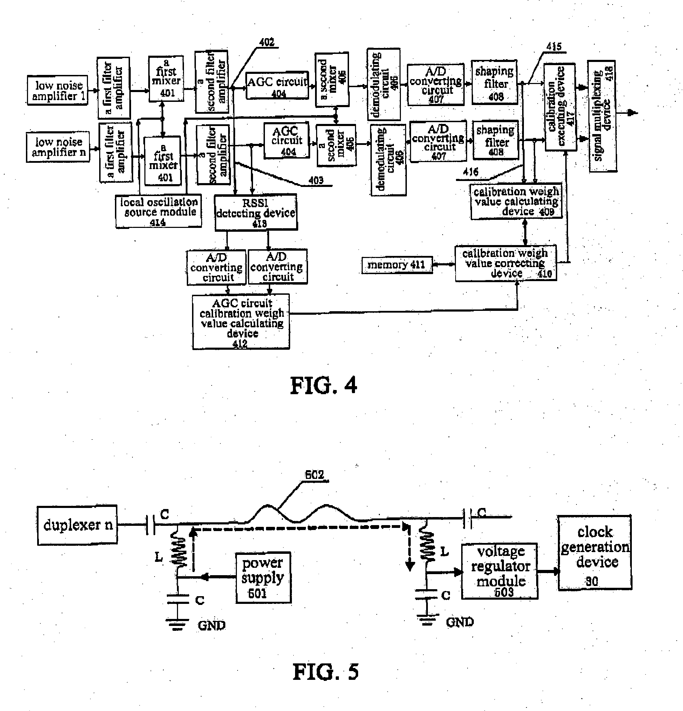

As shown in Fig. 4, the array receiver 40 having a calibration function includes: n receiving signal processing apparatuses correspond to the n receiving links, each receiving signal processing apparatus includes a first filter amplifying circuit; a first mixer 401, a second filter amplifying circuit, an automatic gain control (AGC) circuit 404, a second mixer 405, a demodulating circuit 406, an A/D converting circuit 407 and a shaping filter 408; and also includes a local oscillation source module 414, a receiving signal field intensity (RSSI) detecting circuit 413, n A/D converting circuits, an AGC circuit calibration weigh value calculating apparatus 412, a memory 411, a calibration weigh value calculating apparatus 409, a calibration weigh value correcting apparatus 410, a calibration executing apparatus 417, and a signal multiplexing apparatus 418.

The uplink signal sent from the low noise amplifier of each link is first filtered and amplified by the first filter amplifying circuit and then sent into the first mixer 401. In the first mixer 401, the uplink array signal is down-converted to an intermediate frequency signal. After the intermediate frequency signal is filtered and amplified by the second filter amplifying circuit, the uplink signal of each link is divided into 2 signals, for example, the first intermediate frequency signal 402 and the second intermediate frequency signal 403 as shown in Fig. 4. In the array receiver 40, the local oscillation source module 414 provides local oscillation signal for the first mixer 401 and the second mixer 405 respectively. The first mixers 401 of all the receiving links use the same local oscillation signal, and the second mixers 405 of all the receiving links also use the same local oscillation signal. The array receiver 40 uses the same local oscillation signal so that the phase characteristic of each receiving link does not wander relatively, therefore the phase consistency of each receiving link after being calibrated keeps relatively stable, thus reducing the calibration time and the calibration effect on normal communication.

The first intermediate frequency signal 402 enters the AGC circuit 404 for automatic gain processing and then enters the second mixer 405 for the second down-conversion. The down-converted signal is sent into the demodulator 406. The demodulated signal is sent into the shaping filter 408 after being A/D converted by the A/D converting circuit 407, and the shaping filter 408 shaping filters each uplink signal. A DSP chip or a FPGA chip can be chosen for the shaping filter 408. The shaping filtered baseband signal is further divided into two signals 415 and 416. The first baseband signal 415 enters the calibration executing apparatus 417 for amplitude calibration and phase calibration; the second baseband signal 416 is sent into the calibration weigh value calculating apparatus 409 for calculating an original calibration weigh value $W_0$ of the receiving link. The original calibration weigh value $W_0$ calculated by the calibration weigh value calculating apparatus 409 is further output into the calibration weigh value correcting apparatus 410.

The second intermediate frequency signal 403 enters the RSSI detecting circuit 413. The circuit 413 detects the intensity of the signal received by each antenna unit according to the second intermediate frequency signal 403, and the intensity is output to the A/D converting circuit for converting and then enters the AGC circuit calibration weigh value calculating apparatus 412. The AGC circuit calibration weigh value calculating apparatus 412 calculates a calibration weigh value $W_{AGC}$ and truncation position information of the AGC circuit of each receiving link according to the signal intensity received by each receiving link, and the obtained calibration weigh value $W_{AGC}$ of the AGC circuit is then sent into the calibration weigh value correcting apparatus 410.

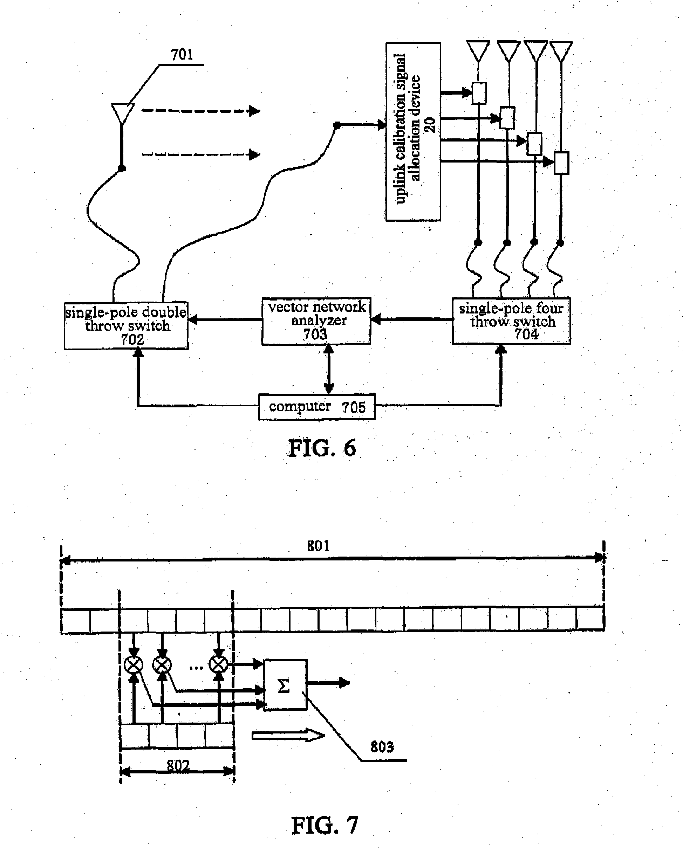

When the receiving link is calibrated, the second baseband signal 416 of each receiving link output by the shaping filter 408 is sent into the calibration weigh value calculating apparatus 409. The calibration weigh value calculating apparatus 409 utilizes scrambling code and spread spectrum code of a downlink pilot channel to search coupled uplink calibration signal from the uplink signals received from each receiving link, and calculates the original calibration weigh value $W_0$ of each receiving link according to the searching results, and then sends the calculated original calibration weigh value $W_0$ of each receiving link into the calibration weigh value correcting apparatus 410. The principle of searching the calibration signal is shown in Fig. 7, and will be introduced in detail hereinafter.

After the original calibration weigh value $W_0$ of each receiving link output by the calibration weigh value calculating apparatus 409 and the calibration weigh value $W_{AGC}$ of the AGC circuit of each receiving link output by the AGC circuit calibration weigh value calculating apparatus 412 reach the calibration weigh value correcting apparatus 410 respectively, the calibration weigh value correcting apparatus 410 reads the pre-calibration data of the outdoor unit 200 stored in the memory 411. The memory 411 further stores data that the signal receiving field intensity of each receiving link changes with the signal power, the calibration weigh value and truncation position information of each AGC circuit besides the amplitude-phase characteristics, i.e. the pre-calibration data, of the outdoor unit 200. Then the original calibration weigh value $W_0$ of each receiving link, the pre-calibration data of the outdoor unit 200, and the calibration weigh value $W_{AGC}$ of each AGC circuit are integrated in accordance with the calibration weigh value correction method, and a calibration weigh value $W$ for calibrating the whole receiving link is generated. The calibration weigh value correcting apparatus 410 sends the above described calibration weigh value $W$ for calibrating the whole receiving link to the calibration executing apparatus 417, and the calibration executing apparatus 417 calibrates the first baseband signal 415 of each receiving link. The calibration executing apparatus 417 truncates and calibrates the array signal according to the calibration weigh value $W$ and the truncation position information. Finally, the calibrated uplink signal is sent into the signal multiplexing apparatus 418 for multiplexing processing, and the multiplexed signal is sent to a base band processing module for processing by a high speed transport apparatus.

Fig. 5 gives the structural schematic view of the feeder device 500. In the present invention, the feeder device 500 is mainly used to supply electric power for the outdoor unit 200 and sends the control signal of the base station to the clock generation device 30, including a power supply 501, a transport cable 502, a voltage regulator module 503, and corresponding inductance, capacitance circuits. The transport cable 502 can adopt the nth feed line or a specific transport cable. The power supply 501 is located at the side of the base station 400. The power supply 501 sends DC signal of the power supply to the outdoor unit 200 via the inductance, capacitance circuits and the transport cable 502 (the nth feed line). An inductance 1 at the side of the base station 400 is used for filtering the AC component in the power supply signal; a capacitance 1 is used for preventing the DC component of the power supply signal from entering the duplexer in the base station. An inductance 2 located in the outdoor unit 200 extracts the DC component of the power supply signal from the nth feed line and sends the same into the voltage regulator module for voltage regulation, and a capacitance 2 can prevent the DC component of the power supply signal from entering the antenna unit. The voltage regulated power supply signal is output to the clock generation device 3.

Now the calibration method for a receiving link of array communication system in the present invention will be illustrated in detail hereinafter.

Step 1: pre-calibrate the outdoor unit 200. During the step, a vector network analyzer is utilized to measure the pre-calibration data of the outdoor unit 200 at each frequency point automatically and store the pre-calibration data in order to correct the calibration weigh value of the receiving link.

The pre-calibration step for the outdoor unit 200 is illustrated hereinafter taking the antenna arrays of four antenna units as an example. As shown in Fig. 6, the automatic testing apparatus of the outdoor unit 200 includes a test antenna 701, a single-pole double throw switch 702, a vector network analyzer 703, a single-pole four throw switch 704, a computer 705, and radio frequency cables which connect the above described apparatuses as well as relative communication apparatuses such as a GPIB card.

Firstly, measures the amplitude-phase characteristics of each antenna unit. The computer 705 controls the single-pole double throw switch 702 to connect Port 1 of the vector network analyzer 703 with the test antenna, and meanwhile, the computer controls the single-pole four throw switch 704 to connect Port 2 of the vector network analyzer 703 with four feed line interfaces of the outdoor unit 200 respectively. Then the computer 705 sets the vector network analyzer 703 into a frequency scanning mode. Every time the single-pole four throw switch 704 turns on one feed line interface of the outdoor unit 200, the vector network analyzer 703 scans the attenuation and the change of the phase, which varies according to the frequency, of the corresponding antenna unit. Then the computer 705 collects the data from the vector network analyzer 703 through the GPIB card, calculates the amplitude-phase characteristics $W(f)_{antenna}$ of each antenna unit at each uplink frequency point, and stores the calculation result.

Secondly, measures the amplitude-phase characteristics of the uplink calibration signal allocation device 20. The computer 705 controls the single-pole double throw switch 702 to connect the Port 1 of the vector network analyzer 703 with the uplink calibration signal allocation device 20 in the outdoor unit 200, and meanwhile, the computer controls the single-pole four throw switch 704 to connect the Port 2 of the vector network analyzer 703 with the four feed line interfaces of the outdoor unit 200 respectively. The computer 705 sets the vector network analyzer 703 into the frequency scanning mode. Every time the single-pole four throw switch 704 turns on one feed line interface of the outdoor unit 200, the vector network analyzer 703 scans the attenuation and the change of the phase, which varies according to the frequency, of the signal from the input terminal of the uplink calibration signal allocation device 20 to the feed line interfaces of the outdoor unit 200. The computer 705 collects the data of the vector network analyzer 703 through the GPIB card, calculates the amplitude-phase characteristics $W(f)_{split}$ of the signals from the input terminal of the uplink calibration signal allocation device 20 to each feed line interface of the outdoor unit 200 at each uplink frequency point, and stores the calculation result.

Thirdly, calculate the pre-calibration coefficient of the outdoor unit 200 according to the above described $W(f)_{antenna}$ and $W(f)_{split}$. Assume that the signal output from the Port 1 of the vector network analyzer 703 is $S$, and there exists no difference in the amplitude characteristic and the phase characteristic of the calibration signal which is output from the Port 1 of the vector network analyzer 703 when it is transmitted from the test antenna to each antenna unit of the outdoor unit 200, and also, an array response of the outdoor unit 200 is $W(f)_{antenna}$, then the signal output from the feed line interface of the outdoor unit 200 is denoted as:

$$S_{antenna} = W(f)_{antenna} \cdot s. \tag{1}$$

When the calibration signal output from the Port I of the vector network analyzer 703 is output from the uplink calibration signal allocation device 20 to the outdoor unit 200, an uplink calibration signal response of the outdoor unit 200 is $W(f)_{split}$, then the signal output from the feed line interface of the outdoor unit 200 is denoted as:

$$S_{split} = W(f)_{split} \cdot s. \tag{2}$$

The equation (1) is transformed to get:

$$S_{antenna} = \frac{W(f)_{split}}{W(f)_{split}} \cdot W(f)_{antenna} \cdot s = \frac{W(f)_{antenna}}{W(f)_{split}} \cdot W(f)_{split} \cdot s \tag{3}$$

then the equation (2) is brought into the equation (3) to

$$S_{antenna} = \frac{W(f)_{antenna}}{W(f)_{split}} \cdot S_{split} \quad \text{get:}$$

$$\tag{4}$$

It is apparent from the equation (4) that an equivalent complete array response can be obtained via an appropriate conversion when the calibration signal is input from the uplink calibration signal allocation device 20 to the receiving link. The complete array response refers to that the array response can reflect the amplitude characteristic and the phase characteristic of the whole receiving link from the antenna unit to the array receiver, and eliminates the impact of the uplink calibration signal allocation device 20 to the amplitude-phase characteristic of the receiving link.

Specifically, the above mentioned conversion is as follows: calculate the array response $H$ according to the known information of the calibration signal when the calibration signal is input from the uplink calibration signal allocation device 20 to the receiving link, and at this time, the array response $H$ does not include the amplitude characteristic and the phase characteristic of the antenna unit. Then the response $H$ is multiplied by a coefficient $\dfrac{W(f)_{antenna}}{W(f)_{split}}$ to obtain

the equivalent complete array response $\dfrac{W(f)_{antenna}}{W(f)_{split}} \cdot H$. Thus a complete receiving link calibration weigh value

is $\dfrac{W(f)_{split}}{W(f)_{antenna}} \cdot \dfrac{1}{H}$. The $\dfrac{1}{H}$ is denoted by $W_0$, $W_0$ is referred to as the original calibration weigh value which denotes the array calibration weigh value obtained when the calibration signal is input from the uplink calibration signal allocation device 20 to the receiving link. Therefore the complete receiving link calibration weigh value is

$\dfrac{W(f)_{split}}{W(f)_{antenna}} \cdot W_0$, wherein $\dfrac{W(f)_{split}}{W(f)_{antenna}}$ is the pre-calibration coefficient of the outdoor unit 200.

Step 2: calculate the calibration weigh value of the AGC circuit.

Firstly, detect the signal power of each receiving link, including: measure the relationship that the receiving signal field intensity (RSSI) voltage of each receiving link varies with the receiving signal power; then re-quantizes the above mentioned measured result based on the bits of fixed-point numbers output from the A/D converter of the RSSI voltage and the reference voltage of the A/D converter, for example, an uplink signal of -100 dBm is input to a certain receiving link of the base station, and assume that the RSSI voltage is 2.5 V, the bits of the A/D converter are 8 bits, and the A/D converter adopts a reference voltage of 5 V, the relationship that the quantized RSSI voltage varies with the receiving signal power is as follows: when the voltage magnitude of RSSI is equal to 2.5*256/5=128, the input uplink signal power is equal to -100 dBm. Keep varying the input uplink signal power and repeat the above mentioned quantization procedure, then a table for the variation of the RSSI voltage with the input signal power can be made and is stored in the memory 411; the RSSI detecting circuit 413 detects the RSSI voltage of each receiving link, performs A/D conversion to the RSSI voltage output by the RSSI detecting circuit 413, then outputs the conversion result into the AGC circuit calibration weigh value calculating apparatus 412, and the signal power received by respective receiving link can be determined by checking the variation table of the RSSI voltage with the input signal power.

Secondly, calculate the calibration weigh value of the AGC circuit 404, including: select the maximum power value from the signal power values of respective receiving link as a reference power $P_{ref}$, determine the reference calibration weigh value $W_{ref}$ according to the storage bits of the calibration weigh value and the gain adjustable range of the AGC circuit 404, and if the storage bits of the calibration weigh value are 8 bits and the gain adjustable range of the AGC circuit 404 is less than 48 dB, it is possible that $W_{ref}$ = 255, and then, calculate the difference between the reference power and the power of the signal received by respective receiving link, after that, the calibration weigh value $W_{AGCn}$ of the AGC circuit 404 of respective receiving link is calculated according to the above mentioned power difference, the calculation equation is:

$$W_{AGCn} = 20 \times \log_{10}(W_{ref}) + P_n - P_{ref} \qquad n \geq 1,$$

Wherein, n refers to the number of the receiving links, $P_n$ refers to the power of the signal received by the nth receiving link.

Then, determine the truncation position, including: when the calibration executing apparatus 417 is realized by using a fixed-point means or a logical means, it is necessary to perform dynamic unified truncation process for the calibrated signal of each receiving link, which aims to make sure that the power proportion characteristic of the signal of each receiving link after being truncated is the same as that of the signal received by each antenna unit, and to make sure that the signal distortion caused by the truncation is within a permitted range. The method for determining the truncation position is specifically as follows: firstly, determine an original truncation position and data reserving bit according to the maximum signal power $P_{MAX}$ which is allowed to be received by the receiving link, the bit of the A/D converter which is used by the receiving link and the bit of the shaping filter coefficient, and it is the same with each receiving link. Then calculate the bits that the original truncation position moves to the right according to the difference value between the maximum signal power $P_{MAX}$ and the power of the signal which is received by each receiving link. The calculation equation is: $RMOV_n = \mod((P_{MAX} - P_n),6)$ $n \geq 1$. Finally, the original truncation position moves to the right according to the calculation result and a truncation position which is actually used is obtained, while the data retention bits keep unchanged during the moving of truncation position to the right.

Step 3: calculate the original array calibration weigh value $W_0$.

The system begins to calibrate the array receiving link upon monitoring that the amplitude consistency and the phase consistency of the array receiving link fails to meet requirement, or the base station receives an instruction of starting calibration.

Firstly, set the clock signal frequency of the clock generation device 30, and the clock generation device 30 transmits clock signal to the uplink calibration signal generation device 10. The uplink calibration signal generation device 10 converts the frequency of the downlink signal obtained through the coupler 101 and generates the uplink calibration signal after it receives the clock signal sent by the clock generation device 30. Then the uplink calibration signal is output to each receiving link by the uplink calibration signal allocation device 20.

After the array receiver receives the uplink signal, the data of each receiving link are collected by the calibration weigh value calculating apparatus 409 and stored in the memory 411. The uplink calibration signal is obtained by changing the frequency of the downlink signal transmitted by the base station, so according to the known scrambling code and spread spectrum code of a downlink common pilot channel, and using common de-spread spectrum and descrambling method, the uplink calibration signal which is injected in the uplink signal can be searched out from the same. And moreover, the amplitude characteristic and the phase characteristic of the receiving link is estimated according to the search result. The original calibration weigh value $W_0$ of the receiving link is calculated according to the uplink calibration signals which are searched out. The step of calculating the original calibration weigh value is described in detail hereinafter.

Fig. 7 shows a principle schematic view illustrating searching calibration signal among the uplink signal. Firstly, collect a section of uplink data 801 with a data length longer than one frame and record the length of the data as M; select a section of scrambling codes corresponding to the first data symbol and multiply the scrambling code with the spread spectrum code corresponding to the data symbol (802), the result is recorded as S, and the data length of S is L; take data with the length of L from the first sample collecting point of the collected uplink data 801, and multiply each datum therein with S, then add all the results (803) and record the sum as SUM(1)=X(1)+j* Y(1); then take data with the length of L from the second sample collecting point, multiply each datum therein with S in the same way, and then add all the results and record the sum as SUM(2)=X(2)+j*Y(2); repeat the above described procedure until the Mth to the Lth sample collecting point of the uplink data, thereby obtaining M to L sums, and the sums are recorded as {SUM(1), SUM(2), ..., SUM(M-L)}; search for the maximum value among the data sequence {SUM(1), SUM(2), ..., SUM(M-L)} and record the same as SUMmax=X+j*Y=max:{SUM(1), SUM(2), ......, SUM(M-L)}.

Finally, calculate the original calibration weigh value of the array receiving link, which is

$$W_0 = 2G \bullet \frac{X + jY}{X^2 + Y^2} .$$

Step 4: calculate the calibration weigh value of the array receiving link, and calibrate the receiving link according to the calibration weigh value.

Send the original calibration weigh value $W_0$ obtained through step 3 to the calibration weigh value correcting apparatus 410, and renew the old original calibration weigh value.

In the calibration weigh value correcting apparatus 410, the original calibration weigh value $W_0$ is corrected according to the pre-calibration coefficient $\dfrac{W(f)_{split}}{W(f)_{antenna}}$ of the outdoor unit 200 and the calibration weigh value $W_{AGC}$ of the AGC circuit 404, and the calibration weigh value of the array receiving link obtained is

$$W = \frac{W(f)_{split}}{W(f)_{antenna}} \cdot W_0 \cdot W_{AGC} ,$$ then the calibration weigh value of the array receiving link is sent to the calibration executing apparatus 417 to calibrate the receiving link.

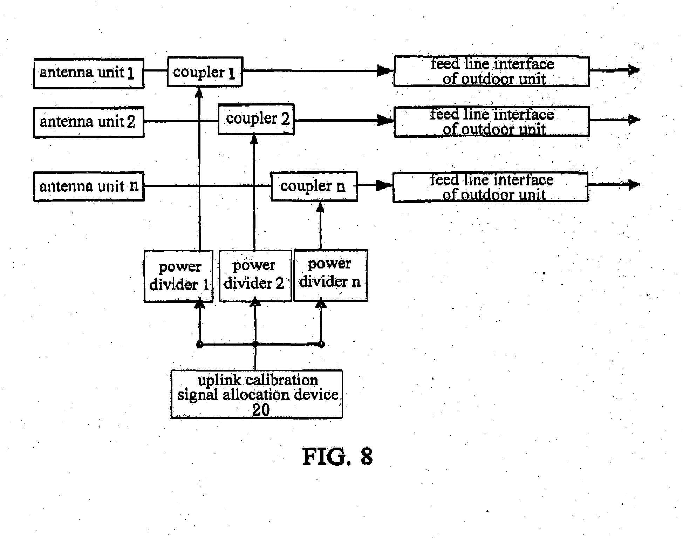

Fig. 8 shows an equivalent mode of the outdoor unit 200. As shown in Figure 8, when the array receiving link is calibrated, the inconsistent error of the amplitude-phase among branches of the uplink calibration signal allocation device 20 and that among the couplers connected thereto will be involved in the original calibration weigh value $W_0$. If the original calibration weigh value $W_0$ is used directly to calibrate the receiving link without being corrected, the inconsistent error of amplitude-phase among the branches of the uplink calibration signal allocation device 20 and that among the corresponding couplers will be involved in the receiving link.

Likewise, when the array receiving link is calibrated, the AGC circuit 404 in the receiving link adjusts the gain of the signals automatically according to the power of the signal received by each link, so the inconsistent error of gain of the AGC circuit 404 is also involved in the calibration weigh value of the gain, which can be handled by using the following correcting method. Firstly, the RSSI detecting circuit 413 detects the power of the signal received by each receiving link, and at this point, the gain characteristic of the signal is not impacted by the AGC circuit 404; secondly, detects the power of the signals received by the baseband, and at this point, the gain characteristic of the signal is already impacted by the AGC circuit 404; and then calculates the difference between the two powers, since the difference is caused by the AGC circuit 404, it can be compensated to the original calibration weigh value $W_0$. The correcting method for the original calibration weigh value $W_0$ is specifically as follows: the array receiving link calibration weigh value = the outdoor unit pre-calibration coefficient $\times$ the original calibration weigh value $\times$ the AGC calibration weigh value, and corresponding equation is

$$W = \frac{W(f)_{split}}{W(f)_{antenna}} \cdot W_0 \cdot W_{AGC} \, .$$

When the clock generation device 30 stops sending the clock signal, the uplink calibration signal generation device 10 stops generating the uplink calibration signal and also stops calculating the original calibration weigh value $W_0$ at the same time.

Finally, it should be understood that the above mentioned embodiments only tend to illustrate the technical solution of the present invention rather than limiting the invention. Although the invention has been described in detail with reference to the preferred embodiments, it should be understood by those of ordinary skilled in the art that modifications and alternations can be made to the technical solution of the present invention and are intended to be included within the scope of the following claims without departing from the scope of the present invention.

## Claims

1. A calibration apparatus for receiving links of array communication system, wherein each of the receiving links includes an antenna unit (100), a radio frequency cable (300), a duplexer, a low noise amplifier, which are connected in series; **characterized in that** the calibration apparatus for the receiving links includes: an uplink calibration signal generation device (10), an uplink calibration signal allocation device (20), a clock generation device (30), n couplers, an array receiver (40) having a calibration function, and a power supply and feeder device (500);

   the uplink calibration signal generation device (10), which has one terminal connected to a first antenna unit and the other terminal connected to a first coupler of the n couplers corresponding to the first antenna unit, for separating downlink signal output from the first coupler, generating uplink calibration signal, and then outputting it to the uplink calibration signal allocation device (20);

   the uplink calibration signal allocation device (20), which has one terminal connected to the uplink calibration signal generation device, for dividing the uplink calibration signal into n uplink calibration signals, and outputting the same to the n couplers;

   the clock generation device (30), which has one terminal connected to the uplink calibration signal generation device, for providing the uplink calibration signal generation device (10) with clock signal based on a control signal of a base station (400);

   the n couplers respectively corresponding to the n antenna units (100), each of which has one terminal connected, via the uplink calibration signal generation device (20), to one antenna unit of n the antenna units (100) and the other terminal respectively connected to one of n the duplexers through the radio frequency cable (300), for coupling the uplink calibration signal with an uplink signal received by the antenna unit (100), and outputting them into one of the n duplexers and one of the low noise amplifiers ;

   the array receiver (40) having a calibration function, which has one terminal connected to the low noise amplifier, for receiving the uplink signal coupled with the uplink calibration signal output by the low noise amplifier, processing the received uplink signal, separating the uplink calibration signal, and based on separated the uplink calibration signal, calculating a calibration weigh value of a array receiving link and calibrating the receiving link; and

   the power supply and feeder device (500), which is located in the station (400) and connected to the clock generation device (30), for providing the clock generation device(30) with power supply, and sending control signal to the base station (400).

2. The calibration apparatus for receiving links of array communication system according to claim 1, **characterized in that**, the uplink calibration signal generation device (10) includes: a coupler (10) of the uplink calibration signal generation device (10), a filter (102), a tunable attenuator (103), and a mixer (104); the coupler (10) of the uplink calibration signal generation device (10) outputs a part of uplink and downlink signals coupled from a first dispatching link to the filter(1 02); the filter(1 02) separates the downlink signal from the uplink and downlink signals, then outputs it to the tunable attenuator (103); the tunable attenuator adjusts the power of the downlink signal, and then outputs the attenuated downlink signal to the mixer (104); and the mixer(104) mixes the downlink signal and the clock signal output from the clock generation device (30), and then generates the uplink calibration signal with desired frequency and power.

3. The calibration apparatus for receiving links of array communication system according to claim 1, **characterized in that**, the uplink calibration signal generation device (10) includes: a coupler (101) of the uplink calibration signal generation device, a filter (102), a tunable attenuator (103), and a mixer (104); the coupler (101) of the uplink calibration signal generation device (10) outputs a part of uplink and downlink signals coupled from the first dispatching link to the filter (102); the filter (102) separates the downlink signal from the uplink and downlink signals, then outputs it to the mixer (104); the mixer (104) mixes the downlink signal and the clock signal output from the clock generation device (30), then generates the uplink calibration signal with desired frequency, and outputs it to the tunable attenuator (103); the tunable attenuator (103) is used to adjust the power of the uplink calibration signal.

4. The calibration apparatus for receiving links of an array communication system according to claim 1, **characterized in that**, the uplink calibration signal allocation device (10) includes a power divider (201) for dividing the uplink calibration signal output from the uplink calibration signal generation device (10) into n calibration signals and then outputting them into the n couplers.

5. The calibration apparatus for receiving links of array communication system according to claim 1, **characterized in that**, the array receiver (40) having a calibration function includes: n receiving signal processing apparatuses corresponding to n receiving links, the receiving signal processing apparatus includes a first filter amplifier, a first mixer (401), a second filter amplifier, an automatic gain control circuit (404), a second mixer (405), a demodulating circuit (406), an A/D converting circuit (407) and a shaping filter (408); and further includes a local oscillation source module (414), a receiving field intensity detecting circuit (413), n A/D converting circuits (407), a calibration weigh value calculating apparatus (409) of the automatic gain control circuit (412), a memory (411), a calibration weigh value calculating apparatus (409), a calibration weigh value correcting apparatus (410), a calibration executing apparatus (417) and a signal multiplexing apparatus (418);
after passing through the first filter amplifier and the first mixer(401), the uplink signal output from the low noise amplifier (1,n) are down-converted into intermediate frequency signal; after filter amplified by the second filter amplifier, the intermediate frequency signal is divided into 2 signals, the first intermediate signal is sequentially input and processed in the automatic gain control circuit (404), the second mixer (405), the demodulator (406), the A/D converting circuit (407) and the shaping filter (408), then, the shaping filter (408) outputs 2 baseband signals, the first baseband signal is input into the calibration executing apparatus (417); and the second baseband signal is input into the calibration weigh value calculating apparatus (409);
the local oscillation source module (414) for providing the first mixer (401) and the second mixer with local oscillation signal;
the receiving field intensity detecting circuit (413) receiving the second path intermediate frequency signal, for detecting the intensity of the signal received by the antenna unit (100), and outputting the signal intensity to the A/D converting circuit (407) to execute conversion, then outputting it to the calibration weigh value calculating apparatus (409) of the automatic gain control circuit (404);
the calibration weigh value calculating apparatus (409) of the automatic gain control circuit (404) for calculating the calibration weigh values and truncation position information of each automatic gain control circuit (404) according to the signal intensity and outputting them to the calibration weigh value correcting apparatus (410);
the memory (411) for storing the amplitude-phase characteristics, i.e. pre-calibration weigh value, of an outdoor unit (200), data that the signal receiving field intensity of each receiving link varies with the signal power, and the calibration weigh value and truncation position information of each automatic gain control circuit (404);
the calibration weigh value calculating apparatus (409) which receives the second baseband signal output from the shaping filter (408), for searching coupled uplink calibration signal, and calculating an original calibration weigh value of each receiving link, then outputting it into the calibration weigh value correcting apparatus (409);
the calibration weigh value correcting apparatus (409) for correcting the original calibration weigh value of each receiving link according to the pre-calibration data in the memory (411) and the calibration weigh value of the automatic gain control circuit (404), acquiring a completed receiving link calibration weigh value, and outputting it into the calibration executing apparatus (417);
the calibration executing apparatus (417) for executing extraction and calibration for the array signal according to the calibration weigh value and truncation position information, and outputting the calibrated signal to the signal multiplexing apparatus (418); and

the signal multiplexing apparatus (418) for multiplexing the calibrated signal, and outputting it to a baseband processing module.

**6.** The calibration apparatus for receiving links of array communication system according to claim 1, **characterized in that**, the feeder device (500) includes a power supply (501), a transport cable (502), a voltage regulator module (503), and corresponding inductance (L), capacitance circuits (C) ; the power supply (501) for supplying power supply signal; the transport cable (502) outputs the power supply signal to an inductance 2 by using the nth feed line of the receiving link or a specific transport cable; the inductance 1 for filtering the alternating current component in the power supply signal; the capacitance 1 for preventing the direct current component in the power supply signal from entering into the duplexer of the base station (400) ; the inductance 2 for extracting the direct current component of the power supply signal from the transport cable (502), and outputting it into the voltage regulator module (503) to regulating voltage; the capacitance 2 for preventing the direct current component of the power supply signal from entering into the antenna unit; the power supply signal after being regulated is output to the clock generation device (30).

**7.** The calibration apparatus for receiving links of array communication system according to any of claims 1 to 6, **characterized in that**, the antenna unit (100), the uplink calibration signal generation device (10), the uplink calibration signal allocation device (20), the n couplers and the clock generation device (30) constitute an outdoor unit (200); the outdoor unit (200) connects the base station (400) via the radio frequency cable (300).

**8.** A calibration method for receiving links of array communication system, wherein each of the receiving links includes an antenna unit (100), a radio frequency cable (300), a duplexer, a low noise amplifier, which are connected in series; a calibration apparatus for the receiving links includes: an uplink calibration signal generation device (10), an uplink calibration signal allocation device (20), a clock generation device (30), n couplers, an array receiver (400) having a calibration function, and a power supply and feeder device (500), **characterized in** the method including the following steps:

step 1, measuring the amplitude-phase characteristics of the antenna unit (100) and the uplink calibration signal allocation device (20), thereby acquiring the pre-calibration coefficient of the receiving link;

step 2, according to the instruction of the base station (400), generating an uplink calibration signal, and the uplink calibration signal entering into the receiving link after being coupled with the uplink signal received by the antenna unit (100);

step 3, detecting uplink signal power of each receiving link, and based on the uplink signal power, calculating the calibration weigh value of an automatic gain control circuit (404) in the array receiver (40);

step 4, searching out the uplink calibration signal from the uplink signals, estimating the amplitude characteristic and the phase characteristic of the receiving link according to the search result, and calculating the original calibration weigh value of each receiving link according to the uplink calibration signals which are searched out;

step 5, correcting the original calibration weigh value according to the pre-calibration coefficient and the calibration weigh value of the automatic gain control circuit (404), thereby acquiring the calibration weigh value of each receiving link; and

step 6, calibrating the receiving link according to the calibration weigh value.

**9.** The calibration method for receiving links of array communication system according to claim 8, **characterized in that**, in the step 1, measuring the amplitude-phase characteristics of the antenna unit (100) further includes: connecting one terminal of a vector network analyzer (703) with a test antenna (701); setting the vector network analyzer (703) in a frequency scanning mode; sequentially connecting the other terminal of the vector network analyzer (703) with the feed line interfaces of the outdoor unit (200); the vector network analyzer (703) scanning data of the amplitude and phase, which correspond to the antenna unit (100) and vary with frequency, of each feed line interface; and according to the above described data, calculating the amplitude-phase characteristics of each antenna unit (100)at each frequency point of uplink.

**10.** The calibration method for receiving links of the array communication system according to claim 9, **characterized in that**, in the step 1, measuring the amplitude-phase characteristics of the uplink calibration signal allocation device (20) further includes: connecting one terminal of the vector network analyzer (703) with the uplink calibration signal allocation device (20); setting the vector network analyzer (703) in a frequency scanning mode; sequentially connecting the other terminal of the vector network analyzer (703) with the feed line interfaces of the outdoor unit (200);

the vector network analyzer (703) scanning the data of the amplitude and phase, which vary with frequency, of the signal from the input terminal of the uplink calibration signal allocation device (20) to the feed line interfaces of the outdoor unit (200); and according to the above described data, calculating the amplitude-phase characteristics of the signal at each frequency point of uplink from the input terminal of the uplink calibration signal allocation device (20) to each feed line interface of the outdoor unit (200).

11. The calibration method for receiving links of the array communication system according to claim 10, **characterized in that**, in the step 1, the calculated pre-calibration data of the receiving link is: $\frac{W(f)_{split}}{W(f)_{antenna}}$, wherein $W(f)_{antenna}$ denotes the amplitude-phase characteristic of each antenna unit (100) at each frequency point of the uplink, $W(f)_{split}$ denotes the amplitude-phase characteristic of the signal from the input terminal of the uplink calibration signal allocation device (20) to each feed line interface of the outdoor unit (200) at each frequency point of the uplink; and storing the pre-calibrating data.

12. The calibration method for receiving links of the array communication system according to claim 8, **characterized in that**, the step 2 further includes: setting the clock signal frequency of the clock generation device (30) according to the frequency point of the base station; the clock generation device (30) transmitting the clock signal to the uplink calibration signal generation device (10); after receiving the clock signal transmitted from the clock generation device (30), the uplink calibration signal generation device (10) converting the downlink signal acquired by the couplers, and generating the uplink calibration signal; dividing the uplink calibration signal into n calibration signals through the uplink calibration signal allocation device (20), inputting them into each receiving link together with the uplink signals received by each corresponding antenna unit (100).

13. The calibration method for receiving links of array communication system according to claim 12, **characterized in that**, the downlink signal acquired through the couplers is less than 1 dB.

14. The calibration method for receiving links of array communication system according to claim 8, **characterized in that**, in the step 3, detecting the uplink signal power of each receiving link further includes: measuring the relation that the field intensity voltage of the receiving signal in each receiving link varies with the receiving signal power; re-quantizing the measured result according to the bits of the A/D converter (407) of RSSI voltage and the reference voltage of the A/D converter (407), thereby constituting a table that the field intensity voltage of the receiving signal varies with the input signal power; a receiving field intensity detecting circuit (413) detecting the field intensity voltage of the receiving signal of each receiving link; A/D converting the field intensity voltage of the receiving signal; according to the result of the field intensity voltage of the receiving link after being A/D converted, checking the above described table, and determining the receiving signal power of each receiving link.

15. The calibration method for receiving links of array communication system according to claim 14, **characterized in that**, in the step 3, calculating the calibration weigh value of the automatic gain control circuit (404) further includes: selecting maximum power value from the signal power values of each receiving link as a reference power, according to the storage bit of the calibration weigh value and the gain adjustable range of the automatic gain control circuit (404), determining a reference calibration weigh value; calculating the difference between the reference power and that of the signal received by each receiving link; according to the above described power difference, calculating the calibration weigh value of the automatic gain control circuit (404) of each receiving link as $W_{AGCn} = 20 \times \log_{10}(W_{ref})$ + $P_n$ - $P_{ref}$, wherein n represents the number of the receiving links and $n \geq 1$, $P_{ref}$ represents the reference power, $W_{ref}$ represents the reference calibration weigh value, $P_n$ represents the signal power received by the nth receiving link; and storing the calibration weigh value of the above described automatic gain control circuit.

16. The calibration method for receiving links of array communication system according to claim 8, **characterized in that**, in the step 4, searching the uplink calibration signal further includes: collecting a section of the uplink data having data length longer than one frame, the length is M; selecting a scramble code corresponding to a first data symbol, and multiplying the scramble code with the spread spectrum code corresponding to the data symbol, and the obtained product is S whose length is L; for the first sampling point to the Mth-Lth sampling point of the collected uplink data, repeatedly executing the following: selecting data whose length is L from the sampling point, multiplying each datum therein with S, and summing the whole products; and selecting the maximum value in the obtained M to L sums as the uplink calibration signal.

17. The calibration method for a receiving link of array communication system according to claim 16, **characterized in**

**that**, in the step 4, calculating the original calibration weigh value is specifically expressed as:

$$W_0 = 2G \bullet \frac{X + jY}{X^2 + Y^2} \, ,$$

wherein $W_0$ represents the original calibration weigh value; G represents the spread spectrum gain of the spread spectrum code; and X, Y respectively represent a real part and a imaginary part of the uplink calibration signal.

18. The calibration method for a receiving link of array communication system according to claim 8, **characterized in that**, in the step 5, determining the calibration weigh value of the array receiving link is:

$$W = \frac{W(f)_{split}}{W(f)_{antenna}} \cdot W_0 \cdot W_{AGC} \, ,$$

wherein $\frac{W(f)_{split}}{W(f)_{antenna}}$ represents the pre-calibration coefficient of the outdoor unit (200), $W_{AGC}$ represents the calibration weigh value of the automatic gain control circuit, and $W_0$ represents the original calibration weigh value.

19. The calibration method for a receiving link of array communication system according to any of claims 8 to 18, **characterized in that**, when the calibration executing apparatus (417) is realized by using a fixed point apparatus or a logical apparatus, the step 3 further includes a step of determining the truncation position information.

20. The calibration method for a receiving link of array communication system according to claim 19, **characterized in that**, the step of determining the truncation position information further includes: according to the maximum signal power $P_{MAX}$ which is permitted by the receiving link, the bits of the A/D converter (407) of the receiving link and the bits of the shaping filter coefficient, determining one original truncation position and data retention bits; according to the difference value between the maximum signal power $P_{MAX}$ and the signal power received by each receiving link, calculating the bits that the original truncation position moves to the right, the calculation equation is: $RMOV_n$ = mod$((P_{MAX} - P_n),6)$; the original truncation position moves to the right according to measured result to obtain the actually used truncation position, and data retention bits keep unchanged when the truncation position moves to the right.

## Patentansprüche

1. Kalibrationsvorrichtung für Empfangsstrecken eines Gruppen-Kommunikationssystems, wobei jede der Empfangsstrecken eine Antenneneinheit (100), ein Hochfrequenzkabel (300), einen Duplexer und einen rauscharmen Verstärker umfasst, die in Serie miteinander verbunden sind; **dadurch gekennzeichnet, dass** die Kalibrationsvorrichtung für die Empfangsstrecken Folgendes umfasst:

eine Vorrichtung zur Erzeugung eines Aufwärtsstrecken-Kalibrationssignals (10), eine Vorrichtung zur Zuweisung eines Aufwärtsstrecken-Kalibrationssignals (20), eine Takterzeugungsvorrichtung (30), n Koppler, einen Gruppenempfänger (40) mit Kalibrationsfunktion und eine Vorrichtung zur Bereitstellung und Einspeisung von Strom (500);
wobei die Vorrichtung zur Erzeugung eines Aufwärtsstrecken-Kalibrationssignals (10), deren eine Anschlussklemme mit einer ersten Antenneneinheit verbunden ist und deren andere Anschlussklemme mit einem ersten Koppler der n Koppler, welcher der ersten Antenneneinheit entspricht, verbunden ist, dazu dient, den Abwärtsstreckensignalausgang vom ersten Koppler zu trennen, ein Aufwärtsstrecken-Kalibrationssignal zu erzeugen und dieses anschließend an die Vorrichtung zur Zuweisung des Aufwärtsstrecken-Kalibrationssignals (20) auszugeben;
wobei die Vorrichtung zur Zuweisung des Aufwärtsstrecken-Kalibrationssignals (20), deren eine Anschlussklemme mit der Vorrichtung zur Erzeugung des Aufwärtsstrecken-Kalibrationssignals verbunden ist, dazu dient, das Aufwärtsstrecken-Kalibrationssignal in n Aufwärtsstrecken-Kalibrationssignale zu unterteilen und diese an die n Koppler auszugeben;
wobei die Takterzeugungsvorrichtung (30), deren eine Anschlussklemme mit der Vorrichtung zur Erzeugung des Aufwärtsstrecken-Kalibrationssignals verbunden ist, dazu dient, die Vorrichtung zur Erzeugung des Aufwärtsstrecken-Kalibrationssignals (10) mit einem Taktsignal zu versorgen, das auf einem Steuersignal einer Basisstation (400) basiert;

wobei die den n Antenneneinheiten (100) entsprechenden n Koppler, deren eine Anschlussklemme über die Vorrichtung zur Erzeugung des Aufwärtsstrecken-Kalibrationssignals (20) jeweils mit einer Antenneneinheit der n Antenneneinheiten (100) verbunden ist und deren andere Anschlussklemme über das Hochfrequenzkabel (300) jeweils mit einem der n Duplexer verbunden ist, dazu dient, das Aufwärtsstrecken-Kalibrationssignal mit einem Aufwärtsstreckensignal zu koppeln, das durch die Antenneneinheit (100) empfangen wird, und diese in einen der n Duplexer und einen der rauscharmen Verstärker auszugeben;

wobei der Gruppenempfänger (40) mit Kalibrationsfunktion, dessen eine Anschlussklemme mit dem rauscharmen Verstärker verbunden ist, dazu dient, das mit dem Aufwärtsstrecken-Kalibrationssignal gekoppelte und vom rauscharmen Verstärker ausgegebene Aufwärtsstreckensignal zu empfangen, das empfangene Aufwärtsstreckensignal zu verarbeiten, das Aufwärtsstrecken-Kalibrationssignal abzutrennen und basierend auf dem abgetrennten Aufwärtsstrecken-Kalibrationssignal einen Kalibrationsgewichtswert einer Empfangsstrecke der Gruppe zu berechnen und die Empfangsstrecke zu kalibrieren; und

wobei die Vorrichtung zur Bereitstellung und Einspeisung von Strom (500), die in der Station (400) angeordnet ist und mit der Takterzeugungsvorrichtung (30) verbunden ist, dazu dient, die Takterzeugungsvorrichtung (30) mit Strom zu versorgen und ein Steuersignal zur Basisstation (400) zu senden.

2. Kalibrationsvorrichtung für Empfangsstrecken eines Gruppen-Kommunikationssystems nach Anspruch 1, **dadurch gekennzeichnet, dass** die Vorrichtung zur Erzeugung des Aufwärtsstrecken-Kalibrationssignals (10) Folgendes umfasst: einen Koppler (10) der Vorrichtung zur Erzeugung des Aufwärtsstrecken-Kalibrationssignals (10), einen Filter (102), einen einstellbaren Abschwächer (103) und einen Mischer (104); wobei der Koppler (10) der Vorrichtung zur Erzeugung des Aufwärtsstrecken-Kalibrationssignals (10) einen Teil der von einer ersten Sendestrecke eingekoppelten Aufwärtsstrecken- und Abwärtsstreckensignale an den Filter (102) ausgibt; wobei der Filter (102) das Abwärtsstreckensignal von den Aufwärtsstrecken- und Abwärtsstreckensignalen abtrennt und dieses anschließend an den einstellbaren Abschwächer (103) ausgibt; wobei der einstellbare Abschwächer die Stärke des Abwärtsstreckensignals einstellt und anschließend das abgeschwächte Abwärtsstreckensignal an den Mischer (104) ausgibt; und wobei der Mischer (104) das Abwärtsstreckensignal und das von der Takterzeugungsvorrichtung (30) ausgegebene Taktsignal mischt und anschließend das Aufwärtsstrecken-Kalibrationssignal mit der gewünschten Frequenz und Stärke erzeugt.

3. Kalibrationsvorrichtung für Empfangsstrecken eines Gruppen-Kommunikationssystems nach Anspruch 1, **dadurch gekennzeichnet, dass** die Vorrichtung zur Erzeugung des Aufwärtsstrecken-Kalibrationssignals (10) Folgendes umfasst: einen Koppler (101) der Vorrichtung zur Erzeugung des Aufwärtsstrecken-Kalibrationssignals, einen Filter (102), einen einstellbaren Abschwächer (103) und einen Mischer (104); wobei der Koppler (101) der Vorrichtung zur Erzeugung des Aufwärtsstrecken-Kalibrationssignals (10) einen Teil der von der ersten Sendestrecke eingekoppelten Aufwärtsstrecken- und Abwärtsstreckensignale an den Filter (102) ausgibt; wobei der Filter (102) das Abwärtsstreckensignal von den Aufwärtsstrecken- und Abwärtsstreckensignalen abtrennt und dieses anschließend an den Mischer (104) ausgibt; wobei der Mischer (104) das Abwärtsstreckensignal und das von der Takterzeugungsvorrichtung (30) ausgegebene Taktsignal mischt und anschließend das Aufwärtsstrecken-Kalibrationssignal mit der gewünschten Frequenz erzeugt und es an den einstellbaren Abschwächer (103) ausgibt; wobei der einstellbare Abschwächer (103) dazu verwendet wird, die Stärke des Aufwärtsstrecken-Kalibrationssignals einzustellen.

4. Kalibrationsvorrichtung für Empfangsstrecken eines Gruppen-Kommunikationssystems nach Anspruch 1, **dadurch gekennzeichnet, dass** die Vorrichtung zur Zuweisung des Aufwärtsstrecken-Kalibrationssignals (10) einen Leistungsteiler (201) umfasst, um die Aufwärtsstrecken-Kalibrationssignal-Ausgabe von der Vorrichtung zur Erzeugung des Aufwärtsstrecken-Kalibrationssignals (10) in n Kalibrationssignale zu teilen und diese anschließend an die n Koppler auszugeben.

5. Kalibrationsvorrichtung für Empfangsstrecken eines Gruppen-Kommunikationssystems nach Anspruch 1, **dadurch gekennzeichnet, dass** der Gruppenempfänger (40) mit Kalibrationsfunktion Folgendes umfasst: n Empfangssignal-Verarbeitungsvorrichtungen, die n Empfangsstrecken entsprechen, wobei die Empfangssignal-Verarbeitungsvorrichtung Folgendes umfasst: einen ersten Filter-Verstärker, einen ersten Mischer (401), einen zweiten Filter-Verstärker, eine Schaltung zur automatischen Verstärkungsregelung (404), einen zweiten Mischer (405), eine Demodulierschaltung (406), eine A/D-Wandlungsschaltung (407) und einen Formfilter (408); und wobei sie ferner Folgendes umfasst: ein Modul zur Bereitstellung von lokalen Schwingungen (414), eine Schaltung zur Erfassung der Empfangsfeldstärke (413), n A/D-Wandlungsschaltungen (407), eine Vorrichtung zur Berechnung des Kalibrationsgewichtswerts (409) der Schaltung zur automatischen Verstärkungsregelung (412), einen Speicher (411), eine Vorrichtung zur Berechnung des Kalibrationsgewichtswerts (409), eine Vorrichtung zur Korrektur des Kalibrationsgewichtswerts (410), eine Vorrichtung zum Ausführen der Kalibration (417) und eine Signalmultiplexvorrichtung (418);

wobei das vom rauscharmen Verstärker (1 ,n) ausgegebene Aufwärtsstreckensignal nach dem Passieren des ersten Filter-Verstärkers und des ersten Mischers (401) in ein Mittelfrequenzsignal hinunterkonvertiert wird; wobei das Mittelfrequenzsignal, nachdem es durch den zweiten Filter-Verstärker filterverstärkt wurde, in zwei Signale unterteilt wird, wobei das erste Mittelfrequenzsignal nacheinander in die Schaltung zur automatischen Verstärkungsregelung (404), den zweiten Mischer (405), den Demodulator (406), die A/D-Wandlungsschaltung (407) und den Formfilter (408) eingegeben und dort verarbeitet wird, wobei der Formfilter (408) anschließend zwei Basisbandsignale ausgibt, wobei das erste Basisbandsignal in die Vorrichtung zum Ausführen der Kalibration (417) eingegeben wird und wobei das zweite Basisbandsignal in die Vorrichtung zur Berechnung des Kalibrationsgewichtswerts (409) eingegeben wird;

wobei das Modul zur Bereitstellung von lokalen Schwingungen (414) dazu dient, den ersten Mischer (401) und den zweiten Mischer mit einem lokalen Schwingungssignal zu versorgen;

wobei die Schaltung zur Erfassung der Empfangsfeldstärke (413), die das Mittelfrequenzsignal des zweiten Pfads empfängt, dazu dient, die Stärke des von der Antenneneinheit (100) empfangenen Signals festzustellen und die Signalstärke an die A/D-Wandlungsschaltung (407) zur Ausführung der Umwandlung auszugeben, wobei das Signal anschließend an die Vorrichtung zur Berechnung des Kalibrationsgewichtswerts (409) der Schaltung zur automatischen Verstärkungsregelung (404) ausgegeben wird;

wobei die Vorrichtung zur Berechnung des Kalibrationsgewichtswerts (409) der Schaltung zur automatischen Verstärkungsregelung (404) dazu dient, die Kalibrationsgewichtswerte und die Abschneidepositionsinformation jeder Schaltung zur automatischen Verstärkungsregelung (404) in Abhängigkeit von der Signalstärke zu berechnen und diese an die Vorrichtung zur Korrektur des Kalibrationsgewichtswerts (410) auszugeben;

wobei der Speicher (411) dazu dient, die Amplituden-Phasen-Eigenschaften, d.h. die Vorkalibrationsgewichtswerte einer Außeneinheit 200, Daten, dass sich die Signalempfangsfeldstärke jeder Empfangsstrecke mit der Signalstärke ändert, sowie den Kalibrationsgewichtswert und die Abschneidepositionsinformation jeder Schaltung zur automatischen Verstärkungsregelung (404) zu speichern; wobei die Vorrichtung zur Berechnung des Kalibrationsgewichtswerts (409), die das vom Formfilter (408) ausgegebene zweite Basisbandsignalausgabe empfängt, dazu dient, nach dem eingekoppelten Aufwärtsstrecken-Kalibrationssignal zu suchen und einen ursprünglichen Kalibrationsgewichtswert für jede Empfangsstrecke zu berechnen und diesen anschließend an die Vorrichtung zur Korrektur des Kalibrationsgewichtswerts (409) auszugeben;

wobei die Vorrichtung zur Korrektur des Kalibrationsgewichtswerts (409) dazu dient, den ursprünglichen Kalibrationsgewichtswert jeder Empfangsstrecke anhand der Vorkalibrationsdaten im Speicher (411) und des Kalibrationsgewichtswerts der Schaltung zur automatischen Verstärkungsregelung (404) zu korrigieren, einen vervollständigten Empfangsstrecken-Kalibrationsgewichtswert zu ermitteln und diesen an die Vorrichtung zum Ausführen der Kalibration (417) auszugeben;

wobei die Vorrichtung zum Ausführen der Kalibration (417) dazu dient, anhand des Kalibrationsgewichtswerts und der Abschneidepositionsinformation eine Extraktion und Kalibration des Gruppensignals vorzunehmen und das kalibrierte Signal an die Signalmultiplexvorrichtung (418) auszugeben; und

wobei die Signalmultiplexvorrichtung (418) dazu dient, das kalibrierte Signal zu multiplexen und es an ein Basisbandverarbeitungsmodul auszugeben.

6. Kalibrationsvorrichtung für Empfangsstrecken eines Gruppen-Kommunikationssystems nach Anspruch 1, **dadurch gekennzeichnet, dass** die Einspeisungsvorrichtung (500) eine Stromversorgung (501), ein Transportkabel (502), ein Spannungsregelungsmodul (503) und entsprechende Schaltungen für Induktivitäten (L) und Kapazitäten (C) umfasst, wobei die Stromversorgung (501) dazu dient, ein Stromversorgungssignal zu liefern; wobei das Transportkabel (502) das Stromversorgungssignal an eine Induktivität 2 ausgibt, indem die n-te Speiseleitung der Empfangsstrecke oder ein spezifisches Transportkabel verwendet wird, wobei die Induktivität 1 dazu dient, die Wechselstromkomponente im Stromversorgungssignal zu filtern; wobei die Kapazität 1 dazu dient, die Gleichstromkomponente im Stromversorgungssignal daran zu hindern, in den Duplexer der Basisstation (400) einzutreten; wobei die Induktivität 2 dazu dient, die Gleichstromkomponente des Stromversorgungsignals aus dem Transportkabel (502) zu extrahieren und sie an das Spannungsregelungsmodul (503) auszugeben, um die Spannung zu regeln; wobei die Kapazität 2 dazu dient, die Gleichstromkomponente des Stromversorgungsignals daran zu hindern, in die Antenneneinheit einzutreten; wobei das Stromversorgungsignal nach der Regelung an die Takterzeugungsvorrichtung (30) ausgegeben wird.

7. Kalibrationsvorrichtung für Empfangsstrecken eines Gruppen-Kommunikationssystems nach einem der Ansprüche 1 bis 6, **dadurch gekennzeichnet, dass** die Antenneneinheit (100), die Vorrichtung zur Erzeugung des Aufwärtsstrecken-Kalibrationssignals (10), die Vorrichtung zur Zuweisung des Aufwärtsstrecken-Kalibrationssignals (20), die n Koppler und die Takterzeugungsvorrichtung (30) eine Außeneinheit (200) bilden; wobei die Außeneinheit (200) über das Hochfrequenzkabel (300) mit der Basisstation (400) verbunden ist.

8. Kalibrationsverfahren für Empfangsstrecken eines Gruppen-Kommunikationssystems, wobei jede der Empfangsstrecken eine Antenneneinheit (100), ein Hochfrequenzkabel (300), einen Duplexer und einen rauscharmen Verstärker umfasst, die in Serie miteinander verbunden sind; wobei eine Kalibrationsvorrichtung für die Empfangsstrecken Folgendes umfasst: eine Vorrichtung zur Erzeugung eines Aufwärtsstrecken-Kalibrationssignals (10), eine Vorrichtung zur Zuweisung eines Aufwärtsstrecken-Kalibrationssignals (20), eine Takterzeugungsvorrichtung (30), n Koppler, einen Gruppenempfänger (400) mit Kalibrationsfunktion und eine Vorrichtung zur Bereitstellung und Einspeisung von Strom (500), **dadurch gekennzeichnet, dass** das Verfahren die folgenden Schritte umfasst:

einen Schritt 1, bei dem die Amplituden-Phasen-Eigenschaften der Antenneneinheit (100) und der Vorrichtung zur Zuweisung des Aufwärtsstrecken-Kalibrationssignals (20) gemessen werden, wodurch der Vorkalibrationskoeffizient der Empfangsstrecke ermittelt wird;
einen Schritt 2, bei dem anhand der Anweisungen seitens der Basisstation (400) ein Aufwärtsstrecken-Kalibrationssignal erzeugt wird und das Aufwärtsstrecken-Kalibrationssignal in die Empfangsstrecke eintritt, nachdem es mit dem Aufwärtsstreckensignal gekoppelt wurde, das durch die Antenneneinheit (100) empfangen wurde;
einen Schritt 3, bei dem die Stärke des Aufwärtsstreckensignals jeder Empfangsstrecke erfasst wird und auf Basis der Stärke des Aufwärtsstreckensignals der Kalibrationsgewichtswert einer Schaltung zur automatischen Verstärkungsregelung (404) im Gruppenempfänger (40) berechnet wird;
einen Schritt 4, bei dem das Aufwärtsstrecken-Kalibrationssignal unter den Aufwärtsstreckensignalen gesucht wird, anhand des Suchergebnisses die Amplitudeneigenschaften und die Phaseneigenschaften der Empfangsstrecke geschätzt werden und anhand der gesuchten Aufwärtsstrecken-Kalibrationssignale der ursprüngliche Kalibrationsgewichtswert jeder Empfangsstrecke berechnet wird;
einen Schritt 5, bei dem der ursprüngliche Kalibrationsgewichtswert anhand des Vorkalibrationskoeffizienten und des Kalibrationsgewichtswerts der Schaltung zur automatischen Verstärkungsregelung (404) korrigiert wird, wodurch der Kalibrationsgewichtswert jeder Empfangsstrecke ermittelt wird; und einen Schritt 6, bei dem die Empfangsstrecke anhand des Kalibrationsgewichtswerts kalibriert wird.

9. Kalibrationsverfahren für Empfangsstrecken eines Gruppen-Kommunikationssystems nach Anspruch 8, **dadurch gekennzeichnet, dass** der Schritt 1 des Messens der Amplituden-Phasen-Eigenschaften der Antenneneinheit (100) ferner Folgendes umfasst: Verbinden einer Anschlussklemme eines vektoriellen Netzwerkanalysators (703) mit einer Testantenne (701); Versetzen des vektoriellen Netzwerkanalysators (703) in einen Frequenzabtastmodus; nacheinander erfolgendes Verbinden der anderen Anschlussklemme des vektoriellen Netzwerkanalysators (703) mit den Speiseleitungsschnittstellen der Außeneinheit (200); wobei der vektorielle Netzwerkanalysator (703) die der Antenneneinheit (100) entsprechenden und sich mit der Frequenz ändernden Daten der Amplitude und Phase jeder Speiseleitungsschnittstelle abtastet; und anhand der oben beschriebenen Daten erfolgendes Berechnen der Amplituden-Phasen-Eigenschaften jeder Antenneneinheit (100) an jedem Frequenzpunkt der Aufwärtsstrecke.

10. Kalibrationsverfahren für Empfangsstrecken des Gruppen-Kommunikationssystems nach Anspruch 9, **dadurch gekennzeichnet, dass** der Schritt 1 des Messens der Amplituden-Phasen-Eigenschaften der Vorrichtung zur Zuweisung eines Aufwärtsstrecken-Kalibrationssignals (20) ferner Folgendes umfasst: Verbinden einer Anschlussklemme des vektoriellen Netzwerkanalysators (703) mit der Vorrichtung zur Zuweisung des Aufwärtsstrecken-Kalibrationssignals (20); Versetzen des vektoriellen Netzwerkanalysators (703) in einen Frequenzabtastmodus; nacheinander erfolgendes Verbinden der anderen Anschlussklemme des vektoriellen Netzwerkanalysators (703) mit den Speiseleitungsschnittstellen der Außeneinheit (200); wobei der vektorielle Netzwerkanalysator (703) die mit der Frequenz variierenden Daten der Amplitude und Phase des Signals von der Eingangsanschlussklemme der Vorrichtung zur Zuweisung des Aufwärtsstrecken-Kalibrationssignals (20) zu den Speiseleitungsschnittstellen der Außeneinheit (200) abtastet; und anhand der oben beschriebenen Daten erfolgendes Berechnen der Amplituden-Phasen-Eigenschaften des Signals an jedem Frequenzpunkt der Aufwärtsstrecke von der Eingangsanschlussklemme der Vorrichtung zur Zuweisung des Aufwärtsstrecken-Kalibrationssignals (20) zu jeder Speiseleitungsschnittstelle der Außeneinheit (200).

11. Kalibrationsverfahren für Empfangsstrecken des Gruppen-Kommunikationssystems nach Anspruch 10, **dadurch**

**gekennzeichnet, dass** die im Schritt 1 berechneten Vorkalibrationsdaten der Empfangsstrecke $\frac{W(f)_{split}}{w(f)_{antenna}}$ lauten,

wobei $w(f)_{antenna}$ die Amplituden-Phasen-Eigenschaften jeder Antenneneinheit (100) an jedem Frequenzpunkt der Aufwärtsstrecke bezeichnet, $w(f)_{split}$ die Amplituden-Phasen-Eigenschaften des Signals von der Eingangsanschlussklemme der Vorrichtung zur Zuweisung des Aufwärtsstrecken-Kalibrationssignals (20) zu jeder Speiseleitungsschnittstelle der Außeneinheit (200) an jedem Frequenzpunkt der Aufwärtsstrecke bezeichnet; und wobei die Vorkalibrationsdaten gespeichert werden.

12. Kalibrationsverfahren für Empfangsstrecken des Gruppen-Kommunikationssystems nach Anspruch 8, **dadurch gekennzeichnet, dass** der Schritt 2 ferner Folgendes umfasst: Einstellen der Frequenz des Taktsignals der Takterzeugungsvorrichtung (30) anhand des Frequenzpunkts der Basisstation; Übertragen des Taktsignals zur Vorrichtung zur Erzeugung des Aufwärtsstrecken-Kalibrationssignals (10) durch die Takterzeugungsvorrichtung (30); nach dem Empfang des von der Takterzeugungsvorrichtung (30) übertragenen Taktsignals erfolgendes Konvertieren des durch die Koppler erfassten Abwärtsstreckensignals durch die Vorrichtung zur Erzeugung des Aufwärtsstrecken-Kalibrationssignals (10) und Erzeugen des Aufwärtsstrecken-Kalibrationssignals; Unterteilen des Aufwärtsstrecken-Kalibrationssignals in n Kalibrationssignale durch die Vorrichtung zur Zuweisung des Aufwärtsstrecken-Kalibrationssignals (20); Eingeben dieser Signale in jede Empfangsstrecke zusammen mit den Aufwärtsstreckensignalen, die durch jede entsprechende Antenneneinheit (100) empfangen wurden.

13. Kalibrationsverfahren für Empfangsstrecken eines Gruppen-Kommunikationssystems nach Anspruch 12, **dadurch gekennzeichnet, dass** das durch die Koppler erfasste Abwärtsstreckensignal weniger als 1 dB beträgt.

14. Kalibrationsverfahren für Empfangsstrecken eines Gruppen-Kommunikationssystems nach Anspruch 8, **dadurch gekennzeichnet, dass** der Schritt 3 des Erfassens der Stärke des Aufwärtsstreckensignals jeder Empfangsstrecke ferner Folgendes umfasst: Messen der Beziehung, mit der sich die Feldstärkenspannung des Empfangssignals in jeder Empfangsstrecke mit der Empfangssignalstärke ändert; neuerliches Quantisieren des gemessenen Ergebnisses anhand der vom A/D-Wandler (407) ausgegebenen Bits der RSSI-Spannung und der Referenzspannung des A/D-Wandlers, wodurch eine Tabelle erzeugt wird, die beschreibt, wie sich die Feldstärkespannung des Empfangssignals mit der Eingangssignalstärke ändert; Erfassen der Feldstärkespannung des Empfangssignals jeder Empfangsstrecke durch die Schaltung zur Erfassung der Empfangsfeldstärke (413); A/D-Umwandeln der Feldstärkespannung des Empfangssignals; anhand des Ergebnisses der Feldstärkespannung der Empfangsstrecke nach der A/D-Wandlung erfolgendes Prüfen der oben beschriebenen Tabelle und Bestimmen der Empfangssignalstärke jeder Empfangsstrecke.

15. Kalibrationsverfahren für Empfangsstrecken eines Gruppen-Kommunikationssystems nach Anspruch 14, **dadurch gekennzeichnet, dass** der Schritt 3 des Berechnens des Kalibrationsgewichtswerts der Schaltung zur automatischen Verstärkungsregelung (404) ferner Folgendes umfasst: Auswählen eines maximalen Stärkewerts aus den Signalstärkewerten jeder Empfangsstrecke als Referenzstärke; Bestimmen eines Referenz-Kalibrationsgewichtswerts anhand des Speicherbits des Kalibrationsgewichtswerts und des Verstärkungsgrad-Einstellbereichs der Schaltung zur automatischen Verstärkungsregelung (404); Berechnen der Differenz zwischen der Referenzstärke und jener des Signals, das von jeder Empfangsstrecke empfangen wird; anhand der oben beschriebenen Stärkendifferenz erfolgendes Berechnen des Kalibrationsgewichtswerts der Schaltung zur automatischen Verstärkungsregelung (404) jeder Empfangsstrecke als $W_{AGCn} = 20 \times log_{10}(W_{ref}) + P_n - P_{ref}$, wobei n für die Anzahl der Empfangsstrecken steht, n$\geq$1, $P_{ref}$ für die Referenzstärke steht, $W_{ref}$ für den Referenz-Kalibrationsgewichtswert steht und $P_n$ für die Signalstärke steht, die von der n-ten Empfangsstrecke empfangen wird; und Speichern des Kalibrationsgewichtswerts der oben beschriebenen Schaltung zur automatischen Verstärkungsregelung.

16. Kalibrationsverfahren für Empfangsstrecken eines Gruppen-Kommunikationssystems nach Anspruch 8, **dadurch gekennzeichnet, dass** der Schritt 4 des Suchens des Aufwärtsstrecken-Kalibrationssignals ferner Folgendes umfasst: Sammeln eines Abschnitts der Aufwärtsstreckendaten, dessen Länge länger als ein Rahmen ist, wobei die Länge M beträgt; Auswählen eines Verwürfelungscodes, der einem ersten Datensymbol entspricht, und Multiplizieren des Verwürfelungscodes mit dem Frequenzspreizungscode, der dem Datensymbol entspricht, wobei das erzielte Produkt S ist, dessen Länge L beträgt; vom ersten Abtastpunkt bis zum M-ten - L-ten Abtastpunkt der gesammelten Aufwärtsstreckendaten erfolgendes wiederholtes Ausführen des folgenden Vorgangs: Auswählen von Daten, deren Länge vom Abtastpunkt L beträgt, Multiplizieren jeder darin enthaltenen Datenangabe mit S und Addieren der gesamten Produkte; und Auswählen des Maximalwerts aus den erzielten M bis L Summen als Aufwärtsstrecken-Kalibrationssignal.

**17.** Kalibrationsverfahren für eine Empfangsstrecke eines Gruppen-Kommunikationssystems nach Anspruch 16, **dadurch gekennzeichnet, dass** im Schritt 4 des Berechnens des ursprünglichen Kalibrationsgewichtswerts dieser spezifisch wie folgt ausgedrückt wird: $W_0 = 2G \cdot \frac{X+jY}{X^2+Y^2}$, wobei $W_0$ für den ursprünglichen Kalibrationsgewichtswert steht; G für die Frequenzspreizungsverstärkung des Frequenzspreizungscodes steht und X, Y jeweils für einen realen Anteil und einen imaginären Anteil des Aufwärtsstrecken-Kalibrationssignals stehen.

**18.** Kalibrationsverfahren für eine Empfangsstrecke eines Gruppen-Kommunikationssystems nach Anspruch 8, **dadurch gekennzeichnet, dass** im Schritt 5 das Bestimmen des Kalibrationsgewichtswerts der Empfangsstrecke der Gruppe wie folgt durchgeführt wird: $W = \frac{W(f)_{split}}{W(f)_{antenna}} \cdot W_0 \cdot W_{AGC}$, wobei $\frac{W(f)_{split}}{W(f)_{antenna}}$ für den Vorkalibrationskoeffizienten der Außeneinheit (200) steht, $W_{AGC}$ für den Kalibrationsgewichtswert der Schaltung zur automatischen Verstärkungsregelung steht und $W_0$ für den ursprünglichen Kalibrationsgewichtswert steht.

**19.** Kalibrationsverfahren für eine Empfangsstrecke eines Gruppen-Kommunikationssystems nach einem der Ansprüche 8 bis 18, **dadurch gekennzeichnet, dass** wenn die Vorrichtung zum Ausführen der Kalibration (417) durch eine Festkommavorrichtung oder eine logische Vorrichtung verkörpert wird, der Schritt 3 ferner einen Schritt des Bestimmens der Abschneidepositionsinformation umfasst.

**20.** Kalibrationsverfahren für eine Empfangsstrecke eines Gruppen-Kommunikationssystems nach Anspruch 19, **dadurch gekennzeichnet, dass** der Schritt des Bestimmens der Abschneidepositionsinformation ferner Folgendes umfasst: anhand der von der Empfangsstrecke zugelassenen maximalen Signalstärke $P_{MAX}$, der Bits des A/D-Wandlers (407) der Empfangsstrecke und der Bits des Formfilterkoeffizienten erfolgendes Bestimmen einer ursprünglichen Abschneideposition und von Datenerhaltungsbits; anhand des Werts der Differenz zwischen der maximalen Signalstärke $P_{MAX}$ und der durch jede Empfangsstrecke empfangenen Signalstärke erfolgendes Berechnen der Bits, um die sich die ursprüngliche Abschneideposition nach rechts bewegt, wobei die Gleichung für die Berechnung wie folgt lautet: $RMOV_n = \mathrm{mod}((P_{MAX} - P_n),6)$; wobei sich die ursprüngliche Abschneideposition gemäß dem erzielten Ergebnis nach rechts bewegt, um die tatsächlich verwendete Abschneideposition zu erhalten, und wobei die Datenerhaltungsbits unverändert bleiben, wenn sich die Abschneideposition nach rechts bewegt.

**Revendications**

**1.** Appareil d'étalonnage pour les liaisons réceptrices d'un système de communication multiéléments, dans lequel chacune des liaisons réceptrices comprend une unité d'antenne (100), un câble radio (300), un duplexeur, un amplificateur à faible bruit, qui sont tous montés en série, **caractérisé en ce que** l'appareil d'étalonnage pour les liaisons réceptrices comprend : un générateur de signal d'étalonnage de la liaison ascendante (10), un dispositif d'attribution du signal d'étalonnage de la liaison ascendante (20), un générateur d'horloge (30), n coupleurs, un récepteur multiéléments (40) ayant une fonction d'étalonnage et un dispositif d'alimentation en énergie et de distribution (500) ; le générateur de signal d'étalonnage de la liaison ascendante (10), dont une borne est connectée à une première unité d'antenne et l'autre borne à un premier coupleur parmi les n coupleurs correspondant à la première unité d'antenne, pour séparer la sortie de signal de liaison descendante du premier coupleur, générer le signal d'étalonnage de la liaison ascendante puis émettre celui-ci en sortie vers le dispositif d'attribution du signal d'étalonnage de la liaison ascendante (20) ;
le dispositif d'attribution du signal d'étalonnage de la liaison ascendante (20), dont une borne est connectée au générateur de signal d'étalonnage de la liaison ascendante, pour diviser le signal d'étalonnage de la liaison ascendante en n signaux d'étalonnage de la liaison ascendante et émettre ceux-ci en sortie vers les n coupleurs ;
le générateur d'horloge (30), dont une borne est connectée au générateur de signal d'étalonnage de la liaison ascendante, pour fournir au générateur de signal d'étalonnage de la liaison ascendante (10) un signal d'horloge basé sur un signal de contrôle d'une station de base (400) ;
les n coupleurs correspondant respectivement aux n unités d'antenne (100), dont chacune a une borne connectée, via le générateur de signal d'étalonnage de la liaison ascendante (20), à une unité d'antenne parmi les n unités d'antenne (100) et l'autre borne connectée respectivement à un des n duplexeurs par l'intermédiaire du câble radio (300), pour coupler le signal d'étalonnage de la liaison ascendante à un signal de liaison ascendante reçu par l'unité d'antenne (100) et les émettre en sortie vers un des n duplexeurs et un des amplificateurs à faible bruit ;

le récepteur multiélément (40) ayant une fonction d'étalonnage, dont une borne est connectée à l'amplificateur à faible bruit, pour recevoir le signal de liaison ascendante couplé au signal d'étalonnage de la liaison ascendante émis par l'amplificateur à faible bruit, traiter le signal de liaison ascendante reçu, séparer le signal d'étalonnage de la liaison ascendante et, à partir du signal d'étalonnage de la liaison ascendante, calculer une valeur de pondération d'étalonnage de la liaison réceptrice multiéléments et étalonner la liaison réceptrice ; et

le dispositif d'alimentation en énergie et de distribution (500), qui se trouve dans la station (400) et qui est connecté au générateur d'horloge (30), pour fournir au générateur d'horloge (30) une alimentation en énergie et émettre un signal de commande vers la station de base (400).

2. Appareil d'étalonnage pour les liaisons réceptrices d'un système de communication multiéléments selon la revendication 1, **caractérisé en ce que** le générateur de signal d'étalonnage de la liaison ascendante (10) comprend : un coupleur (10) du générateur de signal d'étalonnage de la liaison ascendante (10), un filtre (102), un atténuateur ajustable (103), et un mélangeur (104) ; le coupleur (10) du générateur de signal d'étalonnage de la liaison ascendante (10) émet en sortie une partie des signaux de liaison ascendante et de liaison descendante couplés d'une première liaison de distribution au filtre (102) ; le filtre (102) sépare le signal de liaison descendante des signaux de liaison ascendante et de liaison descendante, puis l'émet en sortie vers l'atténuateur ajustable (103) ; l'atténuateur ajustable ajuste la puissance du signal de liaison descendante, puis émet en sortie le signal de liaison descendante atténué vers le mélangeur (104) ; et le mélangeur (104) mélange le signal de liaison descendante et le signal d'horloge émis en sortie par le générateur d'horloge (30), puis génère le signal d'étalonnage de la liaison ascendante ayant la fréquence et la puissance souhaitées.

3. Appareil d'étalonnage pour les liaisons réceptrices d'un système de communication multiéléments selon la revendication 1, **caractérisé en ce que** le générateur de signal d'étalonnage de la liaison ascendante (10) comprend : un coupleur (101) du générateur de signal d'étalonnage de la liaison ascendante, un filtre (102), un atténuateur ajustable (103) et un mélangeur (104) ; le coupleur (101) du générateur de signal d'étalonnage de la liaison ascendante (10) émet en sortie une partie des signaux de liaison ascendante et de liaison descendante couplés à partir de la première liaison de distribution vers le filtre (102) ; le filtre (102) sépare le signal de liaison descendante des signaux de liaison ascendante et de liaison descendante, puis l'émet en sortie vers le mélangeur (104) ; le mélangeur (104) mélange le signal de liaison descendante et le signal d'horloge émis en sortie par le générateur d'horloge (30), puis génère le signal d'étalonnage de la liaison ascendante à la fréquence souhaitée et l'émet en sortie vers l'atténuateur ajustable (103) ; l'atténuateur ajustable (103) sert à ajuster la puissance du signal d'étalonnage de liaison ascendante.

4. Appareil d'étalonnage pour les liaisons réceptrices d'un système de communication multiéléments selon la revendication 1, **caractérisé en ce que** le dispositif d'attribution du signal d'étalonnage de la liaison ascendante (10) comprend un diviseur de puissance (201) pour diviser le signal d'étalonnage de la liaison ascendante émis en sortie par le générateur de signal d'étalonnage de la liaison ascendante (10) en n signaux d'étalonnage puis émettre ceux-ci en sortie vers les n coupleurs.

5. Appareil d'étalonnage pour les liaisons réceptrices d'un système de communication multiéléments selon la revendication 1, **caractérisé en ce que** le récepteur multiélément (40) ayant une fonction d'étalonnage comprend : n appareils de traitement du signal de réception correspondant à n liaisons réceptrices, l'appareil de traitement du signal de réception comprend un premier amplificateur de filtrage, un premier mélangeur (401), un deuxième amplificateur de filtrage, un circuit de contrôle du gain automatique (404), un deuxième mélangeur (405), un circuit démodulateur (406), un circuit de conversion A/N (407) et un filtre correcteur (408) ; et comprend en outre un module de source d'oscillation locale (414), un circuit détecteur de l'intensité du champ de réception (413), n circuits de conversion A/N (407), un calculateur de valeur de pondération d'étalonnage (409) du circuit de contrôle du gain automatique (412), une mémoire (411), un calculateur de valeur de pondération d'étalonnage (409), un correcteur de valeur de pondération d'étalonnage (410), un appareil d'exécution de l'étalonnage (417) et un appareil multiplexeur de signal (418); après être passé par le premier amplificateur de filtrage et le premier mélangeur (401), le signal de liaison ascendante émis en sortie par l'amplificateur à faible bruit (1,n) est converti et réduit en signal de fréquence intermédiaire ; après filtrage et amplification par le deuxième amplificateur de filtrage, le signal de fréquence intermédiaire est divisé en deux signaux, le premier signal intermédiaire est entré et traité successivement dans le circuit de contrôle du gain automatique (404), le deuxième mélangeur (405), le démodulateur (406), le circuit de conversion A/N (407) et le filtre correcteur (408), puis le filtre correcteur (408) émet en sortie deux signaux en bande de base, le premier signal en bande de base est entré dans l'appareil d'exécution de l'étalonnage (417) et le deuxième signal en bande de base est entré dans le calculateur de valeur de pondération d'étalonnage (409) ;

le module de source d'oscillation locale (414) pour fournir au premier mélangeur (401) et au deuxième mélangeur un signal d'oscillation locale ;

le circuit détecteur de l'intensité du champ de réception (413) recevant le signal de fréquence intermédiaire du deuxième chemin, pour détecter l'intensité du signal reçu par l'unité d'antenne (100) et émettre en sortie l'intensité de signal vers le circuit de conversion A/N (407) pour exécuter la conversion, puis l'émettre en sortie vers le calculateur de valeur de pondération d'étalonnage (409) du circuit de contrôle du gain automatique (404) ;

le calculateur de valeur de pondération d'étalonnage (409) du circuit de contrôle du gain automatique (404) pour calculer les valeurs de pondération d'étalonnage et les informations de position de troncature de chaque circuit de contrôle du gain automatique (404) en fonction de l'intensité du signal et les émettre en sortie vers le correcteur de valeur de pondération d'étalonnage (410) ;

la mémoire (411) pour stocker les caractéristiques d'amplitude et de phase, autrement dit la valeur de pondération avant étalonnage, d'une unité extérieure (200), les données indiquant que l'intensité du champ de réception des signaux de chaque liaison réceptrice varie avec la puissance du signal, et la valeur de pondération d'étalonnage et les informations de position de troncature de chaque circuit de contrôle du gain automatique (404) ;

le calculateur de valeur de pondération d'étalonnage (409) qui reçoit le deuxième signal en bande de base émis en sortie par le filtre correcteur (408), pour rechercher le signal d'étalonnage de la liaison ascendante couplé et calculer une valeur de pondération d'étalonnage d'origine de chaque liaison réceptrice puis l'émettre en sortie dans le correcteur de valeur de pondération d'étalonnage (409) ;

le correcteur de valeur de pondération d'étalonnage (409) pour corriger la valeur de pondération d'étalonnage d'origine de chaque liaison réceptrice en fonction des données avant étalonnage en mémoire (411) et de la valeur de pondération d'étalonnage du circuit de contrôle du gain automatique (404), acquérir une valeur de pondération d'étalonnage de liaison réceptrice complétée et l'émettre en sortie vers l'appareil d'exécution de l'étalonnage (417) ;

l'appareil d'exécution de l'étalonnage (417) pour exécuter l'extraction et l'étalonnage du signal multiéléments selon la valeur de pondération d'étalonnage et les informations de position de troncature et émettre en sortie le signal étalonné vers l'appareil multiplexeur de signal (418) ; et

l'appareil multiplexeur de signal (418) pour multiplexer le signal étalonné et l'émettre en sortie vers un module de traitement en bande de base.

6. Appareil d'étalonnage pour les liaisons réceptrices d'un système de communication multiéléments selon la revendication 1, **caractérisé en ce que** le dispositif d'alimentation (500) comprend une alimentation en énergie (501), un câble de transport (502), un module régulateur de tension (503), et des circuits d'inductance (L) et de capacité (C) correspondants ; l'alimentation en énergie (501) fournissant un signal d'alimentation en énergie ; le câble de transport (502) émettant en sortie le signal d'alimentation en énergie vers une inductance 2 en utilisant la $n^{\text{ème}}$ ligne d'arrivée de la liaison réceptrice ou un câble de transport spécifique ; l'inductance 1 filtrant la composante de courant alternatif du signal d'alimentation en énergie ; la capacité 1 empêchant la composante de courant continu du signal d'alimentation en énergie d'entrer dans le duplexeur de la station de base (400) ; l'inductance 2 extrayant la composante de courant continu du signal d'alimentation en énergie provenant du câble de transport (502) et l'émettant en sortie dans le module régulateur de tension (503) pour réguler la tension ; la capacité 2 empêchant la composante de courant continu du signal d'alimentation en énergie d'entrer dans l'unité d'antenne ; le signal d'alimentation en énergie étant émis en sortie, après avoir été régulé, vers le générateur d'horloge (30).

7. Appareil d'étalonnage pour les liaisons réceptrices d'un système de communication multiéléments selon l'une des revendications 1 à 6, **caractérisé en ce que** l'unité d'antenne (100), le générateur de signal d'étalonnage de la liaison ascendante (10), le dispositif d'attribution du signal d'étalonnage de la liaison ascendante (20), les n coupleurs et le générateur d'horloge (30) constituent une unité extérieur (200) ; l'unité extérieure (200) se connecte à la station de base (400) à l'aide du câble radio (300).

8. Procédé pour l'étalonnage des liaisons réceptrices d'un système de communication multiéléments, dans lequel chacune des liaisons réceptrices comprend une unité d'antenne (100), un câble radio (300), un duplexeur, un amplificateur à faible bruit qui sont montés en série ; un dispositif d'étalonnage pour les liaisons réceptrices comprend : un générateur de signal d'étalonnage de la liaison ascendante (10), un dispositif d'attribution du signal d'étalonnage de la liaison ascendante (20), un générateur d'horloge (30), n coupleurs, un récepteur multiélément (400) ayant une fonction d'étalonnage et un dispositif d'alimentation en énergie et de distribution (500), **caractérisé en ce que** le procédé comprend les étapes suivantes :

étape 1 : mesure des caractéristiques d'amplitude et de phase de l'unité d'antenne (100) et du dispositif d'attribution du signal d'étalonnage de la liaison ascendante (20) pour acquérir le coefficient avant étalonnage de la liaison réceptrice ;

étape 2 : suivant l'instruction de la station de base (400), génération d'un signal d'étalonnage de la liaison ascendante et entrée du signal d'étalonnage de la liaison ascendante dans la liaison réceptrice après son couplage au signal de liaison ascendante reçu par l'unité d'antenne (100) ;

étape 3 : détection de la puissance du signal de liaison ascendante de chaque liaison réceptrice et, sur la base de la puissance du signal de liaison ascendante,

calcul de la valeur de pondération d'étalonnage d'un circuit de contrôle du gain automatique (404) dans le récepteur multiélément (40) ;

étape 4 : recherche du signal d'étalonnage de la liaison ascendante parmi les signaux de liaison ascendante, estimation de la caractéristique d'amplitude et

de la caractéristique de phase de la liaison réceptrice selon le résultat de la recherche et calcul de la valeur de pondération d'étalonnage d'origine de chaque liaison réceptrice selon les signaux d'étalonnage de la liaison ascendante recherchés ;

étape 5 : correction de la valeur de pondération d'étalonnage d'origine selon le coefficient avant étalonnage et la valeur de pondération d'étalonnage du circuit de contrôle de gain automatique (404) pour acquérir la valeur de pondération d'étalonnage de chaque liaison réceptrice ; et

étape 6 : étalonnage de la liaison réceptrice selon la valeur de pondération d'étalonnage.

9. Procédé d'étalonnage des liaisons réceptrices d'un système de communication multiéléments selon la revendication 8, **caractérisé en ce que** dans l'étape 1, la mesure des caractéristiques d'amplitude et de phase de l'unité d'antenne (100) comprend en outre : la connexion d'une borne d'un analyseur de réseau vectoriel (703) à une antenne de test (701) ; le réglage de l'analyseur de réseau vectoriel (703) dans un mode de balayage de fréquences ; la connexion successive de l'autre borne de l'analyseur de réseau vectoriel (703) aux interfaces de lignes d'alimentation de l'unité extérieure (200) ; l'acquisition par l'analyseur de réseau vectoriel (703) de données d'amplitude et de phase qui correspondent à l'unité d'antenne (100) et varient avec la fréquence sur chaque interface de ligne d'alimentation ; et, selon les données décrites ci-dessus, le calcul des caractéristiques d'amplitude et de phase de chaque unité d'antenne (100) à chaque fréquence de liaison ascendante.

10. Procédé d'étalonnage des liaisons réceptrices d'un système de communication multiéléments selon la revendication 9, **caractérisé en ce que** dans l'étape 1, la mesure des caractéristiques d'amplitude et de phase du dispositif d'attribution du signal d'étalonnage de la liaison ascendante (20) comprend en outre : la connexion d'une borne de l'analyseur de réseau vectoriel (703) au dispositif d'attribution du signal d'étalonnage de la liaison ascendante (20) ; le réglage de l'analyseur de réseau vectoriel (703) dans un mode de balayage de fréquences ; la connexion successive de l'autre borne de l'analyseur de réseau vectoriel (703) aux interfaces de lignes d'alimentation de l'unité extérieure (200) ; l'acquisition par l'analyseur de réseau vectoriel (703) des données d'amplitude et de phase, qui varient avec la fréquence, du signal allant de la borne d'entrée du dispositif d'attribution du signal d'étalonnage de la liaison ascendante (20) aux interfaces de lignes d'alimentation de l'unité extérieure (200) ; et, selon les données décrites ci-dessus, le calcul des caractéristiques d'amplitude et de phase du signal à chaque fréquence de la liaison ascendante de la borne d'entrée du dispositif d'attribution du signal d'étalonnage de la liaison ascendante (20) à chaque interface de lignes d'alimentation de l'unité extérieure (200).

11. Procédé d'étalonnage des liaisons réceptrices d'un système de communication multiéléments selon la revendication 10, **caractérisé en ce que** dans l'étape 1, les données avant étalonnage calculées pour la liaison réceptrice sont :

$$\frac{W(f)_{div}}{W(f)_{antenne}}$$ , où $W(f)_{antenne}$ désigne la caractéristique d'amplitude et de phase de chaque unité d'antenne (100) à chaque fréquence de la liaison ascendante, $W(f)_{div}$ désigne la caractéristique d'amplitude et de phase du signal allant de la borne d'entrée du dispositif d'attribution du signal d'étalonnage de la liaison ascendante (20) à chaque interface de ligne d'alimentation de l'unité extérieure (200) à chaque fréquence de la liaison ascendante ; et les données avant étalonnage sont enregistrées en mémoire.

12. Procédé d'étalonnage des liaisons réceptrices d'un système de communication multiéléments selon la revendication 8, **caractérisé en ce que** l'étape 2 comprend en outre : le réglage de la fréquence du signal d'horloge du générateur d'horloge (30) selon la fréquence de la station de base ; la transmission du signal d'horloge par le générateur d'horloge (30) au générateur de signal d'étalonnage de la liaison ascendante (10) ; après réception du signal d'horloge transmis par le générateur d'horloge (30), la conversion par le générateur de signal d'étalonnage de la liaison ascendante (10) du signal de liaison descendante acquis par les coupleurs et la génération du signal d'étalonnage de la liaison ascendante ; la division du signal d'étalonnage de la liaison ascendante en n signaux d'étalonnage par le dispositif d'attribution du signal d'étalonnage de la liaison ascendante (20), l'entrée de ceux-ci dans chaque liaison réceptrice avec les signaux de liaison ascendante reçus par chaque unité d'antenne correspondante (100).

13. Procédé d'étalonnage des liaisons réceptrices d'un système de communication multiéléments selon la revendication 12, **caractérisé en ce que** le signal de liaison descendante acquis par les coupleurs est inférieur à 1 dB.

14. Procédé d'étalonnage des liaisons réceptrices d'un système de communication multiéléments selon la revendication 8, **caractérisé en ce que** dans l'étape 3, la détection de la puissance du signal de liaison ascendante de chaque liaison réceptrice comprend en outre : la mesure du rapport selon lequel la tension d'intensité de champ du signal de réception dans chaque liaison réceptrice varie avec la puissance du signal de réception ; la re-quantification du résultat mesuré selon les bits du convertisseur A/N (407) de la tension RSSI et de la tension de référence du convertisseur A/N (407), pour constituer ainsi une table montrant que la tension d'intensité de champ du signal de réception varie avec la puissance du signal d'entrée ; la détection par un circuit détecteur de l'intensité du champ de réception (413) de la tension d'intensité de champ du signal de réception de chaque liaison réceptrice ; la conversion A/N de la tension d'intensité de champ du signal de réception ; en fonction du résultat de la tension d'intensité de champ de la liaison réceptrice après conversion A/N, la vérification de la table décrite ci-dessus et la détermination de la puissance du signal de réception de chaque liaison réceptrice.

15. Procédé d'étalonnage des liaisons réceptrices d'un système de communication multiéléments selon la revendication 14, **caractérisé en ce que** dans l'étape 3, le calcul de la valeur de pondération d'étalonnage du circuit de contrôle du gain automatique (404) comprend en outre : la sélection de la valeur de puissance maximale parmi les valeurs de puissance de signal de chaque liaison réceptrice comme fréquence de référence, selon le bit de stockage de la valeur de pondération d'étalonnage et de la plage de réglage du gain du circuit de contrôle du gain automatique (404), la détermination d'une valeur de pondération d'étalonnage de référence ; le calcul de la différence entre la puissance de référence et celle du signal reçu par chaque liaison réceptrice ; selon la différence de puissance décrite ci-dessus, le calcul de la valeur de pondération d'étalonnage du circuit de contrôle du gain automatique (404) de chaque liaison réceptrice par $W_{ACGn} = 20 \times \log_{10}(W_{ref}) + P_n - P_{ref}$, où n représente le nombre de liaisons réceptrices et $n \geq 1$, $P_{ref}$ représente la puissance de référence, $W_{ref}$ représente la valeur de pondération d'étalonnage de référence, $P_n$ représente la puissance de signal reçue par la n$^{ème}$ liaison réceptrice ; et le stockage en mémoire de la valeur de pondération d'étalonnage du circuit de contrôle du gain automatique décrit plus haut.

16. Procédé d'étalonnage des liaisons réceptrices d'un système de communication multiéléments selon la revendication 8, **caractérisé en ce que** dans l'étape 4, la recherche du signal d'étalonnage de liaison ascendante comprend en outre : la collecte d'une partie des données de liaison ascendante ayant une longueur de données supérieure à une trame, la longueur étant M ; la sélection d'un code d'embrouillage correspondant à un premier symbole de données et la multiplication du code d'embrouillage par le code de spectre étalé correspondant au symbole de données, le produit obtenu étant S dont la longueur est L ; l'exécution répétée de ce qui suit pour le premier point d'échantillonnage jusqu'au M$^{ème}$-L$^{ème}$ point d'échantillonnage des données de liaison ascendante collectées ; la sélection de données dont la longueur est L à partir du point d'échantillonnage, la multiplication de chacune de ces données par S et calcul de la somme des produits entiers ; et la sélection de la valeur maximale dans les sommes de M à L obtenues comme signal d'étalonnage de la liaison ascendante.

17. Procédé pour l'étalonnage d'une liaison réceptrice d'un système de communication multiéléments selon la revendication 16, **caractérisé en ce que** dans l'étape 4, le calcul de la valeur de pondération d'étalonnage d'origine est exprimé spécifiquement par $W_0 = 2G \bullet \dfrac{X + jY}{X^2 + Y^2}$ , où $W_0$ représente la valeur de pondération d'étalonnage d'origine, G représente le gain de spectre étalé du code de spectre étalé et X et Y représentent respectivement une partie réelle et une partie imaginaire du signal d'étalonnage de la liaison ascendante.

18. Procédé pour l'étalonnage d'une liaison réceptrice d'un système de communication multiéléments selon la revendication 8, **caractérisé en ce que** dans l'étape 5, la détermination de la valeur de pondération d'étalonnage de la liaison réceptrice multiéléments est : $W = \dfrac{W(f)_{div}}{W(f)_{antenne}} \cdot W_0 \cdot W_{AGC}$ , où $\dfrac{W(f)_{div}}{W(f)_{antenne}}$ représente le coefficient

avant étalonnage de l'unité extérieure (200), $W_{AGC}$ représente la valeur de pondération d'étalonnage du circuit de contrôle du gain automatique et $W_0$ représente la valeur de pondération d'étalonnage d'origine.

**19.** Procédé pour l'étalonnage d'une liaison réceptrice d'un système de communication multiéléments selon l'une des revendications 8 à 18, **caractérisé en ce que** lorsque l'appareil d'exécution de l'étalonnage (417) est réalisé en utilisant un appareil à point fixe ou un appareil logique, l'étape 3 comprend en outre une étape de détermination des informations de position de troncature.

**20.** Procédé pour l'étalonnage d'une liaison réceptrice d'un système de communication multiéléments selon la revendication 19, **caractérisé en ce que** l'étape de détermination des informations de position de troncature comprend en outre : selon la puissance de signal maximale $P_{MAX}$ autorisée par la liaison réceptrice, les bits du convertisseur A/N (407) de la liaison réceptrice et les bits du coefficient de filtre correcteur, détermination d'une position de troncature d'origine et de bits de rétention de données ; selon la valeur de la différence entre la puissance de signal maximale $P_{MAX}$ et la puissance de signal reçue par chaque liaison réceptrice, calcul des bits dont la position de troncature d'origine se déplace vers la droite, l'équation de calcul étant $RMOV_n = \mathrm{mod}((P_{MAX} - P_n), 6)$ ; déplacement de la position de troncature d'origine vers la droite selon le résultat mesuré afin d'obtenir la position de troncature effectivement utilisée, sans modification des bits de rétention de données quand la position de troncature se déplace vers la droite.

**FIG. 1**

FIG. 2

FIG. 3

**FIG. 4**

**FIG. 5**

FIG. 6

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 01800020
- CN 008155283
- US 6615024 B
- US 2003050016 A
- CN 01112987
- US 6600445 B
- CA 2381384
- WO 0152446 A1